# EUROPÄISCHE PATENTSCHRIFT

(11) **EP 0 687 198 B1**
(45) Veröffentlichungstag und Bekanntmachung des Hinweises auf die Patenterteilung: **22.01.1997**
(21) Anmeldenummer: 94909092.2
(22) Anmeldetag: 01.03.1994
(51) Int. Cl.: B01J 2/04, C02F 1/72, B01J 35/08, B01J 37/00

(54) **VERFAHREN ZUR ENTFERNUNG DES SAUERSTOFF-, NITRIT- UND/ODER NITRATGEHALTES IN WASSER**
METHOD OF REMOVING OXYGEN, NITRITES AND/OR NITRATES FROM WATER
PROCEDE PERMETTANT D'ELIMINER L'OXYGENE, LES NITRITES ET LES NITRATES CONTENUS DANS L'EAU

(30) Priorität: 05.03.1993 DE 4306875; 10.07.1993 DE 4323085; 18.02.1994 DE 4405202
(43) Veröffentlichungstag der Anmeldung: 20.12.1995
(73) Patentinhaber: Solvay Umweltchemie GmbH, D-30173 Hannover (DE)
(72) Erfinder: BONSE, Dirk, D-31275 Lehrte (DE); BREHM, Axel, D-26133 Oldenburg (DE); BRETZ, Karl-Heinz, D-31582 Nienburg (DE); DERLETH, Helmut, D-31582 Nienburg (DE); DARDA, Bettina, D-30171 Hannover (DE); KOCH, Veronika, D-30989 Gehrden (DE); SELL, Michael, D-31228 Peine (DE)
(74) Vertreter: Lauer, Dieter, Dr.
(86) Internationale Anmeldenummer: EP9400585
(87) Internationale Veröffentlichungsnummer: WO9420202

(56) Entgegenhaltungen:
- EP-A- 0 359 074
- DE-C- 2 753 503
- FR-A- 2 397 231
- GB-A- 1 487 661
- DATABASE WPI Derwent Publications Ltd., London, GB; AN 86-072167 & JP,A,61 021 726 (TEIKOKU KAKO) 30. Januar 1986

## Beschreibung

Die vorliegende Erfindung betrifft die Entfernung oder Verminderung des Sauerstoff-, Nitrit- und/oder Nitratgehaltes in Wasser unter Verwendung eines Trägerkatalysators auf Basis eines durch Gelierung in einem Reaktionsgas hergestellten Trägers.

Die in Grund- und Oberflächenwasser in der Bundesrepublik Deutschland aufgefundenen Nitrit- und/oder Nitratgehalte sind in den letzten Jahren erheblich angestiegen. Sie schwanken je nach Standort erheblich und können teilweise die tolerierbaren Höchstgrenzen überschreiten. Für Trinkwasser wird in den neuesten EG-Richtlinien ein zulässiger Grenzwert von 50 mg Nitrat pro Liter empfohlen und für Nitrit ein Grenzwert von 0,1 mg/l. Die steigenden Nitrit- und Nitratgehalte in vielen Grund- und Oberflächenwassern machen in zunehmendem Maße Verfahren zur Nitrit- und Nitratentfernung im Rahmen der Trinkwasseraufbereitung nötig. Hierzu können biologische Verfahren und physikalisch/chemische Maßnahmen im Bereich der Wasserentsalzung angewendet werden. Bekannte Nachteile dieser Verfahren sind die mögliche Kontamination mit Bakterien oder deren Stoffwechselprodukten bzw. die bloße Verlagerung des Problems.

Die Entfernung von Sauerstoff aus Wasser (welches gegebenenfalls auch frei von Nitrit bzw. Nitrat sein kann) ist in vielen Fällen wünschenswert. So ist bekannt, daß Sauerstoff im Wasser die Korrosion von metallischen Bauteilen wie Kühlanlagen und Wärmekraftanlagen fördert. Im Bereich der Lebensmittelherstellung, beispielsweise im Bereich der Herstellung von Getränken wie Fruchtsäften oder Bier, wird vorzugsweise ein sauerstoffarmes oder sauerstofffreies Wasser verwendet.

Die EP-A-0 359 074 (US-A 4,990,266) beschreibt ein katalytisch arbeitendes Verfahren zur Entfernung von Nitrit und/oder Nitrat aus nitrit- und/oder nitratbelastetem Wasser unter selektiver Stickstoffbildung. Man verwendet einen Trägerkatalysator, der gebildet wird aus einem mit einer aus Palladium und/oder Rhodium oder aus Palladium und einem Metall der Kupfergruppe bestehenden Metallkomponente imprägnierten porösen Träger. Dieser Träger weist eine bimodale Porenradienverteilung mit einem mindestens 30 %igen Anteil bezogen auf das Gesamtporenvolumen an Makroporen mit einem Mindestradius von 20 nm (200 Å) auf und/oder eine inhomogene Verteilung der Metallkomponente mit einer Konzentrierung im Oberflächenbereich, oder er liegt als Pulver vor.

Aufgabe der vorliegenden Erfindung ist es, ein verbessertes Verfahren zur Verfügung zu stellen, mit welchem die selektive Überführung von Nitrit und/oder Nitrat in Stickstoff möglich ist. Diese Aufgabe wird durch das in den Ansprüchen angegebene Verfahren gelöst.

Aufgabe der vorliegenden Erfindung ist es weiterhin, einen verbesserten, besonders abriebfesten perlförmigen Trägerkatalysator zur Verfahrensdurchführung zur Verfügung zu stellen. Die Teilchen dieses Trägerkatalysators sollen in Partikelgröße und Zusammensetzung möglichst geringe Streuung aufweisen. Diese Aufgabe wird durch den in den Ansprüchen angegebenen Trägerkatalysator gelöst.

Das erfindungsgemäße, kontinuierlich durchführbare Verfahren zur Entfernung oder Verminderung des Sauerstoff-, Nitrit- und/oder Nitratgehaltes von sauerstoffhaltigem und/oder Nitrit und/oder nitratbelastetem Wasser unter selektiver Stickstoffbildung, wobei man in das sauerstoffhaltige, nitrit- und/oder nitratbelastete Wasser Wasserstoffgas einführt und das mit Wasserstoff beladene Wasser mit einem Katalysator kontaktiert, welcher gebildet wird aus einem mit einer aus Palladium und/oder Rhodium oder aus Palladium und einem Metall der Kupfergruppe bestehenden Metallkomponente beladenen porösen Träger, und man zur Behandlung von nur nitritbelastetem Wasser einen Katalysator, dessen Metallkomponente aus Palladium und/oder Rhodium besteht und, sofern das zu behandelnde Wasser auch Nitrat enthält, einen Katalysator, dessen Metallkomponente aus Palladium und einen Metall der Kupfergruppe oder aus Rhodium und gegebenenfalls Palladium besteht, oder einem Gemisch aus einem Katalysator, dessen Metallkomponente aus Palladium und einem Metall der Kupfergruppe besteht, und einem Katalysator, dessen Metallkomponente nur aus Palladium besteht, einsetzt, und dabei den pH-Wert des Wassers nicht über pH 8 ansteigen läßt und das Verfahren gegebenenfalls so oft hintereinander durchführt, bis der Sauerstoffgehalt, der Nitritgehalt und/oder der Nitratgehalt des Wassers entfernt oder auf einen tolerierbaren Wert vermindert ist, sieht vor, daß man einen Katalysator verwendet, dessen Träger eine monomodale Porenradienverteilung aufweist und durch Überführen eines Sols in kugelförmige Solteilchen unter Kontaktieren der kugelförmigen Solteilchen mit einem Reaktionsgas und Auffangen der Solteilchen in einer Auffangvorrichtung, und anschließender Aufarbeitung der verfestigten Solteilchen unter Altern, Waschen, Trocknen und Kalzinieren hergestellt worden ist.

Die gebildeten kugelförmigen Solteilchen werden im folgenden auch als "Solperlen" bezeichnet.

Im Rahmen der vorliegenden Erfindung können sauerstoffhaltige bzw. nitrit- oder nitratbelastete Wässer und wäßrige Lösungen beliebiger Herkunft behandelt werden. In der vorliegenden Anmeldung bezeichnet der Ausdruck "Wasser" derartige Wässer und wäßrige Lösungen. Enthält das zu reinigende Wasser unter den Reaktionsbedingungen des erfindungsgemäßen Verfahrens reduzierbare andere Stoffe, werden diese ebenfalls reduziert. Sofern es wünschenswert erscheint, entfernt man solche reduzierbare andere Stoffe vorher aus dem zu reinigenden Wasser.

Von entscheidender Bedeutung für das erfindungsgemäße Verfahren ist die Verwendung eines Katalysators auf Basis des speziell hergestellten Trägers. Man kann Teilchen auf der Basis anorganischer Oxide aus der Gruppe Magnesiumoxid, Aluminiumoxid, Siliciumdioxid, Alumosilikat, Zinkoxid, Titandioxid, Chromoxid, Kupferoxid, Manganoxid, Ceroxid, Zinnoxid, Eisenoxid, Nickeloxid, Bleioxid, Molybdänoxid, Vanadiumoxid, Thoriumoxid, Zirkonium, und/oder Hafniumoxid einsetzen. Besonders gut geeignet sind Träger auf Basis von Alumosilikat und insbesondere Aluminiumoxid, deren Herstellung im folgenden erläutert wird. Die anderen Träger können analog hergestellt werden.

Das Verfahren zur Herstellung der Träger in Form kugelförmiger Teilchen auf der Basis der genannten Oxide sieht vor, daß man ein Sol in ein Gel überführt. Als Sol kann man beispielsweise ein metastabiles saures Sol einsetzen, z. B. ein salpetersaures Aluminiumoxidsol. Alternativ kann man instabile Sole durch Vereinigen einer sauren und einer alkalischen Komponente erzeugen, oder indem man eine flüssige alkalische Komponente, z. B. Wasserglas, mit einer anderen alkalischen Komponente, z. B. Alkalialuminat-Lösung vereinigt, wie in der DE-OS 29 17 313 beschrieben. Die Sol-Herstellung gelingt auch dadurch, daß man eine flüssige alkalische Komponente mit einer flüssigen sauren Komponente zu einem Sol vereinigt. Das Sol wird in Solteilchen überführt, die Kugelform annehmen, die resultierenden Solperlen durch Kontaktieren mit einem Reaktionsgas und Einbringen in eine Auffangvorrichtung verfestigt und in einer sich anschließenden Aufarbeitungsstufe gealtert, gewaschen, getrocknet und, bezüglich der hier zur Anwendung kommenden Träger, kalziniert; dabei kommt das Gel nicht mit einem Formöl in Kontakt.

Im Sinne dieses Sol-Gel-Verfahrens wird unter einem Sol also sowohl ein instabiles Sol, welches sofort nach dem Zusammenfügen der Komponenten bzw. beim Kontakt mit dem Reaktionsgas geliert, als auch ein metastabiles Sol, welches noch einige Zeit im fließfähigem Zustand verbleibt, verstanden.

Das Verfahren eignet sich prinzipiell zur Herstellung von Teilchen, welche durch die Gelierung gelierfähiger Lösungen, ausgelöst z. B. durch plötzliche pH-Wert-Änderung oder photochemische Initiierung, hergestellt werden können. Sehr gut lassen sich mit dem erfindungsgemäßen Verfahren Teilchen auf der Basis von Aluminiumoxid erzeugen, welche sich durch Polykondensation in einer Sol-Gel-Reaktion ausbilden.

Vorzugsweise werden saure Aluminiumoxidsole als saurer Komponente mit einer gasförmigen alkalischen Komponente wie z. B. mit gasförmigem Ammoniak oder den Dämpfen organischer Amine, beispielsweise den Dämpfen niederer Alkylamine, umgesetzt. Geeignete Aluminiumoxidsole können entsprechend dem Stand der Technik aus Aluminiumoxiden z. B. aus Tonerdehydraten wie Boehmit, Pseudo-Boehmit, Hydrargillit oder Bayerit, durch Dispergieren in wäßriger Säure, z. B. in Salpetersäure, hergestellt werden. Daneben ist es auch möglich, auf bekannte Weise aus Aluminiumhydroxid und Aluminiumhalogeniden, z. B. AlBr₃, AlCl₃, oder metallischem Aluminium durch Einwirkung von verdünnter Säure, z. B. HCl, Aluminiumsole oder Suspensionen zu erhalten, die im erfindungsgemäßen Verfahren als Aluminiumoxid enthaltende saure Komponenten eingesetzt werden können.

Nach dem Verfahren können selbstverständlich auch Sole eingesetzt werden, welche Feinanteile jeder an sich bekannten Art, Menge und Teilchengröße enthalten. Zur Verbesserung der anwendungstechnischen Eigenschaften können z. B. auf an sich bekannte Weise als Feinanteile Zuschlagstoffe, z. B. Füllstoffe aus der Gruppe Kieselsäuren, Alumosilikate, Magnesiumverbindungen, z. B. MgO, Aluminiumoxide, Titandioxid, Kaolin, Montmorillonit, Bentonit, Zeolith, Stärke, Holzmehl oder Aktivkohle beigefügt sein. Die Füllstoffe können dem Sol, der sauren und/oder alkalischen Komponente dabei in kristalliner oder amorpher Form oder auch in hochdisperser Form, wie es in der deutschen Offenlegungsschrift DE 42 16 868 beschrieben wird, zugefügt werden. Auch Feinanteile, die auf an sich bekannte Weise die katalytischen Eigenschaften der Teilchen verändern, können auf an sich übliche Weise eingesetzt werden, ebenso feinverteilte katalytisch aktive Metalle oder deren Vorprodukte, z. B. Metallsalze.

Die Vermischung der alkalischen Komponente mit der sauren Komponente zu einem gelierfähigen instabilen Sol kann auf an sich bekannte Weise in einer geeigneten Mischvorrichtung, z. B. einer Mischdüse durchgeführt werden. Anschließend wird das so erhaltene Sol beziehungsweise ein metastabiles Sol unmittelbar in eine Vorrichtung gepumpt, mit der es in tropfenförmige Solteilchen überführt und mit dem Reaktionsgas kontaktiert werden kann.

Kugelförmige Teilchen auf der Basis von Aluminiumoxid können z. B. hergestellt werden, indem man kugelförmige Tropfen aus einem Aluminiumoxid-Hydrosol durch eine in Vibration versetzte Düsenplatte erzeugt, welche man durch seitliches Anblasen mit Ammoniakgas vorverfestigt und dann in einer wäßrigen Ammoniaklösung auffängt. Bei der Herstellung von Teilchen größeren Durchmessers muß man die Teilchen üblicherweise eine Schaumschicht passieren lassen, damit der Aufschlag der Teilchen auf die Ammoniaklösung gebremst wird, um somit eine Deformation bzw. ein Auseinanderbrechen der Tropfen zu verhindern. Das verwendete Aluminiumoxidsol bzw. die Aluminiumoxidsuspension sollte nach diesem Verfahren eine bestimmte Viskosität im Bereich von 10 bis 500 mPa·s bei Raumtemperatur aufweisen.

Gemäß einer bevorzugten Ausführungsform sprüht man die Solteilchen von unten in das Reaktionsgas ein und fängt die Solteilchen, die nun tropfenförmig vorliegen (Solperlen), nach Durchfliegen einer gekrümmten Flugbahn in der Auffangvorrichtung auf.

Ein besonders bevorzugtes Herstellverfahren für den im erfindungsgemäßen Wasserbehandlungsverfahren anwendbaren Träger wird im folgenden beschrieben.

Ein besonders gut geeignetes Verfahren zur Herstellung der Katalysatorträger in Form kugelförmiger Teilchen (Perlen) auf Basis anorganischer Oxide, vorzugsweise aus der Gruppe Magnesiumoxid, Aluminiumoxid, Siliciumdioxid, Alumosilikat, Zinkoxid, Titandioxid, Chromoxid, Kupferoxid, Manganoxid, Ceroxid, Zinnoxid, Eisenoxid, Nickeloxid, Bleioxid, Molybdänoxid, Vanadiumoxid, Thoriumoxid, Zirkonium-und/oder Hafniumoxid, durch Sol-Gel-Umwandlung sieht vor, daß man ein Sol in eine ein Reaktionsgas enthaltende Reaktionszone von unten so einsprüht, daß das Sol unmittelbar vor oder erst bei Eintritt in die Reaktionszone in einzelne Soltropfen (Solperlen) aufreißt und die gebildeten Solperlen auf einer gekrümmten Flugbahn die Reaktionszone durchfliegen, wobei sie Kugelform annehmen und vorverfestigt werden, und man anschließend die vorverfestigten Solteilchen in einer Auffangvorrichtung auffängt. Durch eine derartige Verfahrensweise werden Ort und Zeitpunkt der Solperlenbildung auf den Beginn der Gelierung (Vorverfestigung) der Solperlen in vorteilhafter Weise abgestimmt. Die Solperlen, die im Zeitpunkt ihrer Entstehung noch flüssige Soltropfen mit einer weitgehend idealen Kugelform und weitgehend gleichem Kugeldurchmesser sind, werden daher beim Durchfliegen des Reaktionsgases in ihrer weitgehend idealen, gleichmäßigen Kugelform fixiert, d. h. vorverfestigt und vor deformativer Einwirkung gut geschützt, bevor durch weitere an sich bekannte Maßnahmen des Sol-Gel-Verfahrens die vorverfestigte Kugelform abschließend stabil gefestigt wird. Hierzu wird die Einsprühvorrichtung in einem bestimmten - vom Fachmann wie unten beschrieben, leicht zu ermittelnden - Abstand unterhalb der Eintrittsöffnung in die Reaktionszone angeordnet, wobei der Abstand in etwa derjenigen Entfernung ausgehend von der Sprühvorrichtung entspricht, in welchem das Sol in Solperlen aufreißt. Zusätzlich wird das Sol aus der Sprühvorrichtung von unten, d. h. entgegen der Schwerkraft, unter einem bestimmten Winkel α in die Reaktionszone eingesprüht, wobei Winkel α hierbei aus einer horizontalen, senkrecht zur Schwerkraft liegenden Achse und der Tangente des versprühten Sols im Austrittspunkt aus dem Sprühsystem gebildet wird.

Nach diesem Verfahren wird demgemäß ein gelierfähiges Sol von unten nach oben in die Reaktionszone, insbesondere unter einem Winkel α < 90°, eingesprüht. Als Sprühvorrichtung können dabei je nach Teilchengrößenbereich Spritzen mit Kanülen unterschiedlichen Durchmessers oder an sich bekannte Sprühdüsen, Sprühräder, Ultraschalldüsen, Turboglocken, mechanisch angetriebene Düsen, Magnetventile oder Sprühsysteme, wie man sie bei der elektrostatischen Versprühung oder in Jet-Printern (z. B. piezoerregte Düsen) verwendet, eingesetzt werden. Der Teilchengrößenbereich wird dabei über die eingesetzte Sprühvorrichtung variiert. Bei einer gewünschten Teilchengröße im Bereich von 0,01 mm bis 0,3 mm werden zweckmäßigerweise Turboglocken oder Sprühdüsen, z. B. an sich bekannte Spiraldüsen (z. B. Spiraldüsen der Firma Spraybest) oder vorzugsweise Ultraschalldüsen eingesetzt. Bei einer gewünschten Teilchengröße im Bereich von 0,3 mm bis 5 mm, insbesondere 0,3 mm bis 3,5 mm, verwendet man zweckmäßigerweise Sprühräder oder bevorzugt Kanülen entsprechenden Durchmessers. Bei sehr geringem Abstand der Sprühvorrichtung zur Eintrittsöffnung der das Reaktionsgas enthaltenden Reaktionszone kann es zweckmäßig sein, z. B. bei der Verwendung von Sprühdüsen oder Kanülen mit kleinem Durchmesser, die Sprühvorrichtung mit einem Spülgas (z. B. Druckluft) anzublasen, um somit eine Verstopfung der Sprühvorrichtung durch zu früh gelierendes Sol zu vermeiden.

Unter dem Begriff "anorganisches Oxid", insbesondere unter "Aluminiumoxid" wird auch solches Oxid verstanden, das neben der oder den gelbildenden oxidischen Komponenten weitere die anwendungstechnischen und/oder katalytischen Eigenschaften verbessernde Zusätze enthalten. Beispielsweise kann man Acetylacetonate des Mg, Zr, Cu, Pb oder Ti zusetzen.

Nach dem Sprühgelierungs-Verfahren lassen sich kugelförmige Teilchen herstellen, deren durchschnittliche Durchmesser nach dem Trocknen im Bereich von 0,001 mm bis 5 mm liegen können. Die Teilchengröße kann dabei über die eingesetzte Sprühvorrichtung variiert werden. Dabei ist die Teilchengröße von Al₂O₃ im Anwendungsverfahren bei der katalytischen Wasserbehandlung unkritisch; die Teilchen der anderen genannten Oxide liegen vorteilhaft im unteren genannten Größenbereich, vorzugsweise unterhalb 0,3 mm.

Die Herstellung kugelförmiger Teilchen auf der Basis von Aluminiumoxid nach dem Sprühgelierungs-Verfahren ist auch möglich, wenn man an sich bekannte metastabile saure Aluminiumoxidhydratsole einsetzt, die gegebenenfalls noch weitere die anwendungstechnischen Eigenschaften verbessernde Komponenten enthalten. Geeignete Aluminiumoxidhydratsole können entsprechend dem Stand der Technik aus Aluminiumoxiden, z. B. aus Tonerdehydraten wie Boehmit, Pseudo-Boehmit, Hydrargillit oder Bayerit, durch Dispergieren in wäßriger Säure, z. B. in Salpetersäure, hergestellt werden. Auch ist es möglich, auf bekannte Weise aus Aluminiumhydroxid und Aluminiumhalogeniden, z. B. AlBr₃, AlCl₃, oder metallischem Aluminium durch Einwirkung von verdünnter Säure, z. B. HCl, erhaltene Aluminiumoxidhydratsole oder Dispersionen im erfindungsgemäßen Verfahren einzusetzen. Die Gelierung des Sols kann hierbei auf unterschiedliche, an sich bekannte Verfahrensweisen bewirkt bzw. bei Einsatz von selbstgelierenden Solen unterstützt werden. So kann die Gelbildung sowohl chemisch als auch physikalisch, z. B. durch pH-Wert-Änderung (zum Sauren oder Alkalischen), Temperaturänderung (Erwärmen oder Abkühlen) sowie beispielsweise photochemische Initiierung ausgelöst und unterstützt werden.

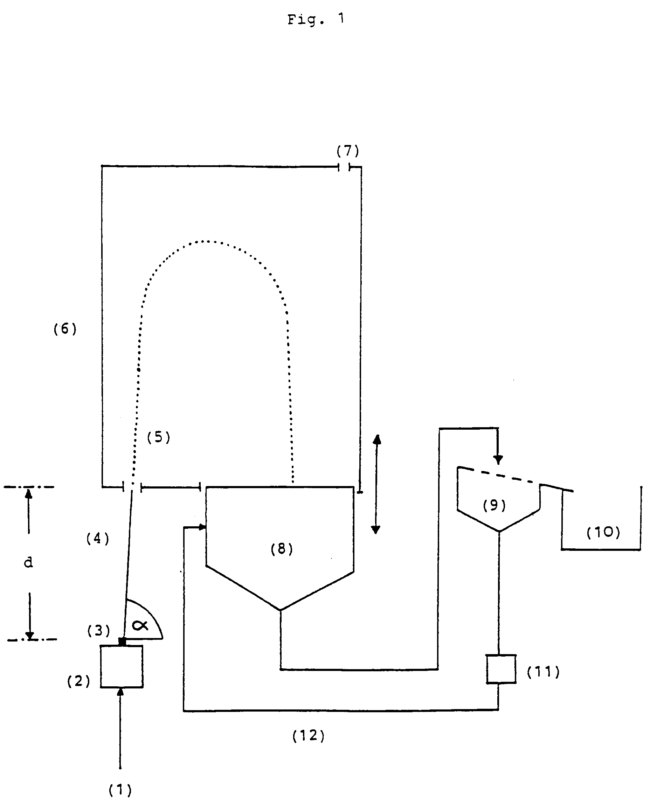

In Figur 1 ist beispielhaft der Aufbau einer Vorrichtung zur Durchführung des Sprühgelierungs-Verfahrens schematisch dargestellt. Durch ein Sprühsystem wird das gelierfähige Sol von unten nach oben in einem Winkel alpha < 90°, z. B. einem Winkel von 40 bis 89°, vorzugsweise 80 bis 88°, in die Reaktionszone so eingesprüht, daß das Sol nach dem Verlassen des Sprühsystems erst unmittelbar vor oder beim Passieren der Eintrittsöffnung in die Reaktionszone in weitgehend gleichgroße Solperlen aufgerissen wird, wobei die Solperlen im Augenblick ihrer Bildung praktisch sofort der gelierenden Wirkung des Reaktionsgases ausgesetzt sind. Der Ort des Zerfalls des Sols in einzelne Solperlen hängt außer vom Winkel auch von der Viskosität des Sols, der jeweils eingesetzten Sprühvorrichtung sowie dem Druck, mit dem das Sol die Sprühvorrichtung verläßt, ab. Um den Punkt, an dem das Sol in einzelne Solperlen aufreißt, wunschgemäß einzustellen, wird der Abstand d zwischen Sprühvorrichtung und Eintrittsöffnung in die Reaktionszone zu Beginn des Sprühvorganges vom Fachmann durch Inaugenscheinnahme so variiert, d. h. der Abstand d vermindert oder gegebenenfalls vergrößert, bis der Aufreißpunkt des Sols in einzelne Solperlen sich unmittelbar vor oder in der Eintrittsöffnung zur Reaktionszone befindet.

Nach Eintritt in die Reaktionszone durchfliegen die gebildeten Solperlen eine in Form einer Parabel gekrümmte Flugbahn durch das sich in der Reaktionszone befindliche Reaktionsgas, wobei sie in ihrer Kugelform fixiert, d. h. vorverfestigt werden. Dadurch, daß die Solperlen diese parabelförmige Flugbahn durch das Reaktionsgas passieren müssen, kann das Reaktionsgas nach dem erfindungsgemäßen Verfahren besonders lange zur Vorverfestigung der Solperlen beitragen, so daß dadurch die Gefahr der Deformation der Perlen beim Auftreffen auf die Auffangvorrichtung bereits weitgehend minimiert ist. Durch zusätzliches Erwärmen der Reaktionszone, z. B. auf bis etwa 180 bis 200 °C, kann die Vorverfestigung der Teilchen gegebenenfalls noch weiter unterstützt werden. Um die Gefahr der Deformation noch weiter zu verringern, kann gewünschtenfalls eine in der Höhe verstellbare Auffangvorrichtung nahe an den Umkehrpunkt der parabelförmigen Flugbahn der Solperlen, an dem die Solperlen ihre geringste kinetische Energie besitzen, herangebracht werden.

Als Auffangvorrichtung kann im erfindungsgemäßen Verfahren eine vorzugsweise flachgezogene Folie, z. B. eine PVDF-Folie, PE- oder PVC-Folie, ein zweckmäßigerweise glattes Auffangblech oder ein mit Flüssigkeit gefülltes Gefäß eingesetzt werden. Die Auffangvorrichtung, insbesondere bei Verwendung eines glatten Auffangblechs, kann als solche gekühlt werden, oder es kann z. B. ein Blech eingesetzt werden, das gleichmäßig mit festem CO₂ bedeckt ist. Vorzugsweise verwendet man in einer Verfahrensvariante ein mit festem CO₂ gefülltes Gefäß; hierbei kann durch das für festes Kohlendioxid bekannte Leidenfrost-Phänomen die kinetische Energie der Solperlen beim Aufprall noch weiter vermindert werden. Besonders bevorzugte Verfahrensvarianten verwenden als Auffangvorrichtung einen mit einer Flüssigkeit, insbesondere mit einer Reaktionsflüssigkeit, gefüllten Auffangbehälter. Unter Reaktionsflüssigkeiten werden dabei alle üblichen sauren beziehungsweise alkalischen Flüssigkeiten verstanden, wie sie üblicherweise für die Verfestigung von Teilchen nach dem Sol-Gel-Verfahren eingesetzt werden. Gebräuchliche Reaktionsflüssigkeiten sind hierfür z. B. wäßrige Ammoniaklösung, z. B. eine 5 bis 10 %ige wäßrige Ammoniaklösung, oder saure Reaktionsflüssigkeiten wie Salzsäure, Schwefelsäure oder Salpetersäure in Konzentrationen von 1 bis 5 Gew.-%. Bei Verwendung einer Reaktionsflüssigkeit sollten zweckmäßigerweise in der Reaktionszone hierzu äquivalente Reaktionsgase eingesetzt werden. Legt man als Reaktionsflüssigkeit z. B. eine wäßrige Ammoniaklösung vor, so sollten als Reaktionsgas Ammoniak-Gas oder Dämpfe organischer Amine eingesetzt werden. Bei Verwendung saurer Reaktionsflüssigkeiten wie Salzsäure, Schwefelsäure oder Salpetersäure sollten die hierzu äquivalenten sauren Reaktionsgase, also Chlorwasserstoff, Schwefeldioxid bzw. Stickoxide verwendet werden.

Das im erfindungsgemäßen Verfahren verwendete Reaktionsgas kann in der in Form eines geschlossenen Behältnisses vorliegenden Reaktionszone über der entsprechenden Auffangvorrichtung leicht gehalten werden. Frisches Reaktionsgas kann dabei nach Bedarf ständig durch eine separate Gaszufuhr in die Reaktionszone nachgefüllt werden. Neben den bereits genannten alkalischen beziehungsweise sauren Reaktionsgasen können bei der Verwendung selbstgelierender Sole als Reaktionsgase auch inerte Gase wie Luft oder Stickstoff eingesetzt werden. Gegebenenfalls kann die Vorverfestigung der Solteilchen beim Durchfliegen der gekrümmten Flugbahn durch das Reaktionsgas durch Erwärmen der Reaktionszone unterstützt werden. Zweckmäßigerweise erwärmt man hierfür die Reaktionszone auf Temperaturen von bis zu 1000 °C oder höher, vorzugsweise 500 bis 800 °C. Auch die Verringerung der Viskosität der Gele beim Abkühlen kann zur Vorverfestigung der Perlen ausgenutzt werden. Insbesondere bei Verwendung von einem mit festem Kohlendioxid gefüllten Behälter als Auffangvorrichtung kann die Reaktionszone auch auf Temperaturen unterhalb der Raumtemperatur gekühlt werden, um auf diese Weise durch Erniedrigung der Viskosität die Vorverfestigung der Solteilchen zu unterstützen.

Von der Auffangvorrichtung können die vorverfestigten Solteilchen der Aufarbeitung, wie sie üblicherweise für nach dem Sol-Gel-Prozeß hergestellten Teilchen durchgeführt werden, zugeführt werden. Diese Aufarbeitung umfaßt üblicherweise die Aufarbeitungsschritte Waschen, Trocknen und gegebenenfalls Kalzinieren. So werden die Solteilchen üblicherweise bei Temperaturen im Bereich von 100 bis 200 °C für eine Zeitdauer von 1 bis 24 Stunden getrocknet. Bei Verwendung einer Folie oder eines mit festem Kohlendioxid gefüllten Behälters als Auffangvorrichtung können die Perlen auch direkt, z. B. durch eine Saugvorrichtung, in eine Trocknungseinheit, z. B. in einen an sich bekannten Sprühtrockner, überführt werden.

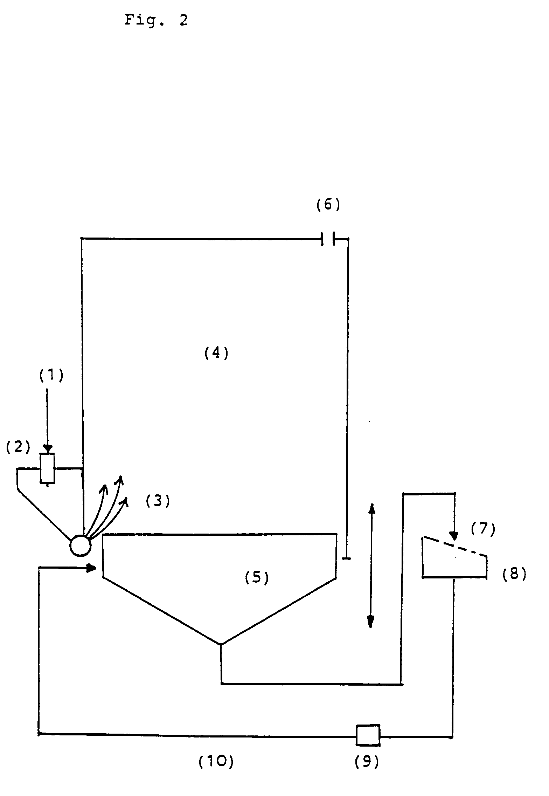

Zur Herstellung besonders kleiner Teilchen, insbesondere von Teilchen mit einem Durchmesser im Bereich von 0,001 mm bis 0,3 mm, wird in einer Abwandlung des Sprühgelierungs-Verfahrens zweckmäßigerweise eine Vorrichtung eingesetzt, wie sie schematisch in Figur 2 dargestellt ist. Diese Vorrichtung unterscheidet sich von der in Figur 1 dargestellten dadurch, daß die Sprühvorrichtung eine Nebelkammer umfaßt. In dieser Verfahrensvariante werden durch eine Düse, zweckmäßigerweise eine Spiraldüse oder vorzugsweise eine Ultraschalldüse kleine Solperlen erzeugt, welche zunächst in der Nebelkammer nach unten sinken und dann von unten nach oben mittels einer Fördereinrichtung, z. B. einem aus Lüftungsanlagen bekannten Flügelventilator, in die das Reaktionsgas enthaltende Reaktionszone eingesprüht werden. Die weiteren Schritte nach dem Einsprühen des Sols erfolgen anschließend analog den Verfahrensschritten, wie sie oben bereits für die in Figur 1 dargestellte Verfahrensweise beschrieben sind.

Die erhaltenen kugelförmigen Perlen können nach dem Auffangen in der Auffangvorrichtung in einer weiteren Ausgestaltung dieser Verfahren nach der Vorverfestigung in dem Reaktionsgas noch einer Behandlung mit einem niederen Alkylalkohol, insbesondere einem C₁- bis C₄-Alkohol, wie z. B. Methanol, Ethanol, Propanol oder Isopropanol oder einer Behandlung mit Aceton unterzogen werden, bevor sie der Trocknung zugeführt werden. Vorzugsweise setzt man Isopropanol, welches möglichst wasserfrei sein sollte, für diese Behandlung ein. Durch die Behandlung der Teilchen mit einem niederen Alkylalkohol oder Aceton kann zum einen in vorteilhafter Weise ein Verkleben der erhaltenen Teilchen, insbesondere von Teilchen mit einem durchschnittlichen Durchmesser kleiner 1 mm beim Trocknen vermieden werden, zum anderen kann durch diese Behandlung das Porenvolumen der erhaltenen Teilchen aufgeweitet werden. Hierfür werden die Teilchen aus der Auffangsvorrichtung in ein Behältnis überführt und für eine Zeitdauer von 1 Minute bis 24 Stunden, zweckmäßigerweise 2 bis 3 Stunden, mehrmals mit Alkohol überschichtet. So kann z. B. durch diese Behandlung das Porenvolumen auch von Aluminiumoxidteilchen gezielt verändert werden; das Porenvolumen von nach dem erfindungsgemäßen Verfahren hergestellten Aluminiumoxidteilchen liegt z. B. nach Behandlung mit einem niederen Alkylalkohol im Bereich von 0,4 bis 2,5 ml/g (bestimmt nach dem Trocknen).

Durch das Sprühgelierungsverfahren ist es in vorteilhafter Weise möglich, Teilchen auf der Basis anorganischer Oxide mit einer sehr gleichmäßigen Kugelgestalt, einer engen Verteilung der Porendurchmesser sowie einem sehr engen Kornspektrum zu erhalten, Eigenschaften, die gerade für das erfindungsgemäße Anwendungsverfahren Vorteile bringen. Darüber hinaus kann der Anfall größerer Mengen an Unter- beziehungsweise Überkorn weitgehend vermieden werden. Unter einem "engen" Kornspektrum wird dabei ein Kornspektrum verstanden, bei dem 80 % der Teilchen einen Durchmesser innerhalb des in der folgenden Tabelle angegebenen Bereichs um den jeweiligen mittleren Durchmesser aufweisen:

| **Durchmesser der Teilchen [mm]** | **Kornspektrum, welches 80 % der Teilchen um den jeweiligen mittleren Durchmesser aufweisen [mm]** |
|---|---|
| 1,0 - 5,0 | ± 1,0 |
| 0,1 - 1,0 | ± 0,1 |
| 0,01 - 0,1 | ± 0,02 |
| 0,001 - 0,01 | ± 0,004 |

Beim beschriebenen Verfahren braucht kein Formöl eingesetzt zu werden, so daß die so hergestellten Teilchen auch frei von weiteren Verunreinigungen oder Verfärbungen sind. Auch läßt sich bei den hergestellten Teilchen durch eine Behandlung mit Aceton oder einem niederen Alkylalkohol vor dem Trocknen das Porenvolumen in vorteilhafter Weise aufweiten. Darüber hinaus zeigen die nach dem beschriebenen Verfahren hergestellten kugelförmigen Teilchen eine überraschend hohe Abriebfestigkeit; auch deswegen eignen sie sich sehr gut als Katalysatorträger für das erfindungsgemäße Anwendungsverfahren.

Bei dem Verfahren können kugelförmige Teilchen, insbesondere auf Basis von Aluminiumoxid erhalten werden, welche
a) einen Durchmesser im Bereich von 0,01 bis 5 mm, vorzugsweise 0,02 bis 3,5 mm,
b) eine spezifische Oberfläche im Bereich von 1 bis 900 m²/g, vorzugsweise 100 bis 800 m²/g,
c) ein Schüttgewicht im Bereich von 0,1 bis 1,0 g/ml,
d) ein Porenvolumen im Bereich von 0,25 bis 2,5 ml/g,
e) eine Verteilung der Porendurchmesser mit einem Maximum (monomodale Porenverteilung im Bereich von 1,5 bis 200 nm (15 bis 2000 Å), vorzugsweise 1,5 bis 40 nm (15 bis 400 Å),
aufweisen.

Die spezifische Oberfläche, das Porenvolumen und die Porenverteilung der erfindungsgemäßen Teilchen kann durch Quecksilber-Porosimetrie oder Aufnahme und Auswertung von Stickstoff-Adsorptionskurven auf an sich bekannte Weise bestimmt werden. Das Maximum der Porendurchmesser und der mittlere Porendurchmesser lassen sich dann hieraus ermitteln.

Teilchen, die eine monomodale Porenverteilung, bei der 80 %, vorzugsweise 95 %, der Porendurchmesser der Formel 0,8 R ≤ R ≤ 1,2 R entsprechen, wobei R dem mittleren Porendurchmesser im Bereich von 1,5 bis 40 nm (15 bis 400 Å) entspricht, zeigen, sind sehr gut für das Anwendungsverfahren geeignet.

Besonders geeignet sind dabei Teilchen auf der Basis von Aluminiumoxid, welche ein Porenvolumen im Bereich von 0,5 bis 2,5 ml/g, vorzugsweise 0,7 bis 2,5 ml/g, und einen mittleren Porendurchmesser R im Bereich von 6 bis 38 nm (60 bis 380 Å) aufweisen.

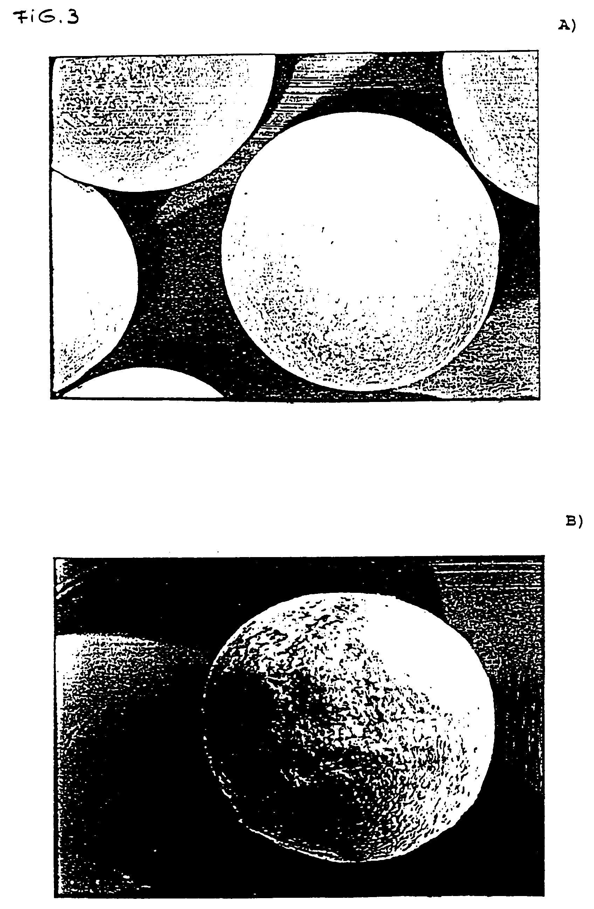

Neben einer besonders gleichmäßigen Kugelform und engem Kornspektrum zeichnen sich die erhaltenen Teilchen durch ein hohes Porenvolumen bei einer ungewöhnlich engen Verteilung der Porendurchmesser aus. Hierbei ist besonders vorteilhaft, daß mindestens 80 %, vorzugsweise 95 % der Teilchen einen Porendurchmesser aufweisen, der im bereits angegebenen Toleranzbereich von 0,8 R ≤ R ≤ 1,2 R liegt. Der Anteil von Makroporen, d. h. von Poren mit einem Durchmesser von über 20 nm (200 Å), liegt dabei unter 5 %. Figur 3A und 3B zeigen exemplarisch die homogene gleichmäßige Oberflächenstruktur (elektronenmikroskopische Aufnahmen). Die Perlen weisen eine besonders homogene Struktur und eine besonders homogene Oberfläche auf, was für deren erfindungsgemäße Verwendung als Katalysatorträger im Verfahren zur Wasserbehandlung sehr vorteilhaft ist. Eine weitere besondere Eigenschaft der Teilchen ist dabei, daß sie bei ihrem hohen Porenvolumen eine überraschend hohe Abriebfestigkeit zeigen, was sie im Zusammenhang mit der hohen Schüttdichte besonders geeignet für die erfindungsgemäße Verwendung als Katalysatorträger bei der katalytischen Wasserbehandlung in Fließbett- bzw. Wirbelschichtreaktoren macht.

Die nach einem der vorstehend beschriebenen Verfahren hergestellten Teilchen werden noch getrocknet und kalziniert und mit den obengenannten katalytisch aktiven Komponenten (Rhodium, Palladium, gegebenenfalls ein Metall der Kupfergruppe) belegt, damit sie dann im erfindungsgemäßen Wasserbehandlungsverfahren eingesetzt werden können. Das Trocknen erfolgt üblicherweise bei Temperaturen im Bereich von 100 °C bis 200 °C für eine Zeitdauer von 1 bis 24 h. Anschließend können die Teilchen gegebenenfalls auf an sich bekannte Weise bei Temperaturen von 400 bis 1200 °C, vorzugsweise 550 bis 900 °C, insbesondere 590 bis 650 °C kalziniert werden. Die angewendete Temperatur richtet sich danach, welcher Porositätsgrad gewünscht wird. Bei niedriger Temperatur erhält man Träger mit kleinem Porendurchmesser und hoher Oberfläche, bei höherer Temperatur Träger mit größerem Porendurchmesser bei kleinerer Oberfläche.

Vorzugsweise setzt man im erfindungsgemäßen Wasserbehandlungsverfahren Trägerkatalysatoren mit Palladium oder Palladium und Kupfer als katalytische Komponente und Al₂O₃ als Trägermaterial ein.

Der Gehalt an den Metallen liegt üblicherweise im Bereich von 0,1 bis 5 Gew.-%, bezogen auf den fertigen Katalysatorträger. Die Herstellung der erfindungsgemäßen Katalysatoren kann auf an sich bekannte Weise erfolgen. Beispielsweise kann man Metallsalze oder komplexe Metallverbindungen im Imprägnierverfahren, Sprühverfahren oder Fällungsverfahren auf die Teilchen aufbringen und nach Trocknung und Kalzinierung gewünschtenfalls reduzieren. Bevorzugt werden die Metalle durch ein Imprägnierverfahren, z. B. mit einer Lösung oder Suspension von Metallsalzen oder komplexen Metallverbindungen in Wasser oder einem organischen Lösungsmittel, auf die Teilchen aufgebracht. Dabei läßt sich feststellen, daß erfindungsgemäß hergestellte Teilchen bei dieser Imprägnierung zu einer Randanreicherung neigen, d. h., daß die im Imprägnierverfahren eingesetzten Metalle sich stärker in den Randbereichen als im Inneren der Teilchen ablagern. Dies ist besonders vorteilhaft, da hierdurch für die Herstellung der Katalysatoren entsprechend weniger Metall eingesetzt werden muß. Die katalytisch aktiven Metalle sind bei Schalenkatalysatoren durch kurze Diffusionswege besser zugänglich. Ein weiterer Vorteil der auf Basis der erfindungsgemäß hergestellten Teilchen erhaltenen Katalysatoren, ist deren überraschend hohe Abriebfestigkeit.

Zur Katalysatorherstellung sind Träger in Form von kugelförmigen Teilchen auf der Basis von Aluminiumoxid, welche einen Durchmesser im Bereich von 0,05 bis 1 mm, vorzugsweise 0,4 bis 0,6 mm, besonders geeignet. Eine spezifische Oberfläche im Bereich von 5 bis 250 m²/g, vorzugsweise 100 bis 200 m²/g, ist besonders vorteilhaft. Ein Schüttgewicht im Bereich von 0,3 bis 1,2 g/ml insbesondere 0,3 bis 0,7 g/ml, und ein Porenvolumen im Bereich von 0,6 bis 1,2 ml/g ist vorteilhaft. Der mittlere Porendurchmesser liegt dabei im Bereich von 10 bis 20 nm (100 bis 200 Å).

Verwendet man die durch Sprühgelierung hergestellten Träger, so weisen die Katalysatoren entsprechend dem Trägermaterial ein enges Kornspektrum auf.

Ein weiterer Gegenstand der vorliegenden Erfindung ist ein spezieller im erfindungsgemäßen Verfahren verwendbarer Trägerkatalysator. Der zur Verminderung des Sauerstoffgehaltes, des Nitrit- und/oder Nitratgehaltes geeignete Trägerkatalysator umfaßt Palladium, Rhodium oder Palladium und ein Metall der Kupfergruppe auf einem Träger auf Basis anorganischer Oxide aus der Gruppe Magnesiumoxid, Aluminiumoxid, Siliciumdioxid, Alumosilikat, Zinkoxid, Titandioxid, Chromoxid, Kupferoxid, Manganoxid, Ceroxid, Zinnoxid, Eisenoxid, Nickeloxid, Bleioxid, Molybdänoxid, Vanadiumoxid, Thoriumoxid, Zirkonium- und/oder Hafniumoxid, wobei der Träger durch Überführen eines Sols in kugelförmige Solteilchen unter Kontaktieren der Solteilchen mit einem Reaktionsgas und Auffangen der Solteilchen nach Durchfliegen in einer Auffangvorrichtung, Aufarbeiten der verfestigten Solteilchen durch Altern, Waschen, Trocknen und Kalzinieren, hergestellt wurde, mit der Maßgabe, daß der Träger eine spezifische Oberfläche im Bereich von 5 bis 250 m²/mg und eine monomodale Porenradienverteilung aufweisen soll. Al₂O₃ ist bevorzugter Träger.

Als besonders geeignet haben sich Trägerkatalysatoren erwiesen, deren Träger vor dem Aufbringen der katalytisch aktiven Metallkomponente bei einer Temperatur von 600 bis 1200 °C kalziniert worden ist. Trägerkatalysatoren mit einem Schüttgewicht von 0,3 bis 1,2 g/ml und einem Porenvolumen von 0,4 bis 1,2 ml/g liefern besonders gute Verfahrensergebnisse. Weitere bevorzugte Ausführungsformen des erfindungsgemäßen Trägerkatalysators entsprechen den vorstehend als bevorzugt einsetzbar beschriebenen Trägerkatalysatoren. Besonders vorteilhaft sind Trägerkatalysatoren, die zwar einen völlig homogenen Aufbau des Trägers (wie beim Sprühgelierungsverfahren erhalten), aber eine inhomogene Verteilung der katalytisch aktiven Komponente aufweisen, bei welchen nämlich die Konzentration der katalytisch aktiven Komponente vom Zentrum zur Peripherie zunimmt (Schalenkatalysatoren).

Die Herstellung solcher Trägerkatalysatoren ist nach an sich bekannten Verfahren möglich. Zur Herstellung von Palladium oder Rhodium enthaltenden Trägerkatalysatoren imprägniert man zweckmäßig die Träger mit einer wäßrigen Lösung einer löslichen Palladium- oder Rhodiumverbindung mit anschließender Trocknung und Glühung. Zur Herstellung von Palladium und Kupfer enthaltenden Trägerkatalysatoren geht man zweckmäßig so vor, daß man die Träger zunächst mit einer wäßrigen Lösung einer Palladiumverbindung, vorzugsweise Na₂PdCl₄-Lösung, imprägniert, anschließend trocknet und gegebenenfalls glüht (kalziniert) und gegebenenfalls reduziert, und danach den Palladium enthaltenden Träger mit einer wäßrigen Lösung einer Kupferverbindung imprägniert und anschließend noch einmal kalziniert und reduziert. Besonders vorteilhafte, Palladium und Kupfer enthaltende Katalysatoren wurden hergestellt, indem der Palladium enthaltende Träger mit einer basischen Lösung, beispielsweise wäßriger Natriumcarbonat-Lösung, kontaktiert wurde und anschließend die Imprägnierung mit einer Kupferverbindung vorgenommen wurde. Natürlich kann man die Metalle auch gleichzeitig auf den Träger aufbringen.

Trägerkatalysatoren auf Basis der genannten, durch Kontaktieren mit einem Reaktionsgas perlförmig vorstabilisierten oxidischen Träger weisen den Vorteil auf, daß sie eine hohe Gleichmäßigkeit aufweisen, und zwar einerseits hinsichtlich ihrer äußeren Form (Kugelform, enges Spektrum der Größenverteilung) als auch im Hinblick auf die stoffliche Qualität des Trägermaterials bei allen Teilchen. Sie weisen eine hohe mechanische Stabilität auf und zeichnen sich, in bevorzugten Ausführungsformen, durch eine Konzentration der katalytisch aktiven Komponenten an der Oberfläche aus. Daraus resultiert insbesondere bei Al₂O₃ als Trägermaterial eine hohe Selektivität in bezug auf die Reduktion zu N₂ und eine hohe Abbaurate der Katalysatorteilchen.

Verwendet man Trägerkatalysatoren mit einer hohen Oberfläche (> 140 m²/g) und entsprechend kleinen Porendurchmessern, wird bei Schalenkatalysatoren die Stoffdiffusion weniger limitiert als bei Katalysatoren nach dem Stand der Technik.

Der Nitrit- und/oder Nitrat-Gehalt sowie der Sauerstoffgehalt, welcher mit dem erfindungsgemäßen Verfahren unter Verwendung der speziellen Trägerkatalysatoren entfernt oder auf eine tolerierbare Konzentration vermindert werden kann, kann in einem weiten Bereich variieren. So lassen sich mit dem erfindungsgemäßen Verfahren Wasser mit einer Nitrit- und/oder Nitratbelastung zwischen 0,1 mg/l und einigen Gramm pro Liter behandeln. Insbesondere ist das vorliegende Verfahren geeignet zur Entfernung des Nitrit- und/oder Nitratgehaltes aus Wasser mit einer geringen Nitrit- und/oder Nitratbelastung, beispielsweise im Bereich von 0,1 mg bis 2 g/l Nitrit und/oder 1 mg bis 10 g/l Nitrat.

Für den Fachmann ist klar, daß das erfindungsgemäße Verfahren zur Entfernung von Sauerstoff aus Wasser angewandt werden kann, welches weder Nitrit noch Nitrat enthält. Das Verfahren kann natürlich auch zur Entfernung von Nitrit und/oder Nitrat aus Wasser angewendet werden, welches keinen Sauerstoff enthält. Schließlich kann man das Verfahren gemäß einer weiteren Variante auch zur Entfernung von Nitrit und/oder Nitrat aus gleichzeitig Sauerstoff enthaltendem Wasser anwenden. In diesem Fall wird neben Nitrit bzw. Nitrat auch der Sauerstoff entfernt.

Insbesondere wird das erfindungsgemäße Verfahren zur Behandlung von Wasser eingesetzt, welches in seinem Reinheitsgrad einem Wasser entspricht, welches eine natürliche Filtration durchlaufen hat. Derartiges Wasser kann wasserlösliche Substanzen, z. B. anorganische Salze, in Größenordnungen, wie sie im Grundwasser anzutreffen sind, also z. B. bis zu einigen Gramm pro Liter enthalten. Beispiele von mit dem erfindungsgemäßen Verfahren zu behandelnden Wasser sind z. B. Grundwasser, Brunnenwasser, Quellwasser oder Uferfiltrate oder bereits entsprechend vorgereinigte sonstige Abwässer z. B. industrielle Abwässer, beispielsweise aus Rauchgaswäschen, in welchen der Gehalt an Sauerstoff, Nitrit und/oder Nitrat vermindert werden kann. Weitere Beispiele für Wasser, die mit dem erfindungsgemäßen Verfahren zu behandeln sind, sind Getränke wie Mineralwässer, Limonaden und Fruchtsäfte sowie Wasser, die zur Herstellung von Getränken wie Mineralwässer, Limonaden, Fruchtsäfte oder zur Bierherstellung, verwendet werden sollen.

Das Verfahren eignet sich beispielsweise zur Anwendung im Rahmen der Trinkwasseraufarbeitung sowie der Aufarbeitung von Wasser beziehungsweise Brauchwasser für die Lebensmittel- oder Getränkeindustrie sowie für sonstige Zwecke, wo ein sauerstoff-, nitrit- und/oder nitratarmes oder -freies Wasser benötigt wird.

Enthält das Wasser nur Nitrit und gegebenenfalls Sauerstoff, so kann man einen Trägerkatalysator verwenden, dessen Metallkomponente aus Palladium und/oder Rhodium besteht. Enthält das zu behandelnde Wasser auch Nitrat, so verwendet man einen Trägerkatalysator, dessen Metallkomonente aus Palladium und einem Metall der Kupfergruppe oder aus Rhodium und gegebenenfalls Palladium besteht. Sofern das zu behandelnde Wasser auch Nitrat enthält, kann man auch das erfindungsgemäße Katalysatorsystem einsetzen, vorteilhaft das Katalysatorsystem aus nur Palladium als Metallkomponente enthaltenden Katalysatorteilchen und Palladium und ein Metall der Kupfergruppe, insbesondere Kupfer als Metallkomponente enthaltenden Trägerkatalysatorteilchen. Das Gewichtsverhältnis von palladiumhaltigen zu Palladium/Kupfer-haltigen Katalysatorteilchen kann je nach dem Nitrat- und Nitritgehalt des Wassers und der Menge und Zusammensetzung der Metallkomponenten der Katalysatoren variieren und kann zwischen 1:5 und 5:1, vorzugsweise zwischen 1:2 und 2:1 liegen. Die unterschiedlichen Partikel liegen zweckmäßig getrennt voneinander vor. Man führt das zu behandelnde Wasser dann erst durch die Palladium/Kupfergruppenmetall-haltigen Partikel und dann durch die nur Palladium enthaltenden Partikel, vorzugsweise jeweils in der Wirbeischicht.

Zweckmäßig wird der pH-Wert des Wassers so reguliert, daß der reaktionsbedingte Anstieg nicht zu Werten über pH 8 führt. Die Einstellung des pH-Wertes kann beispielsweise durch Zugabe einer wäßrigen Lösung einer Säure, vorzugsweise einer verdünnten anorganischen Säure wie Salzsäure oder CO₂ erfolgen.

Das Einleiten des Wasserstoffgases in das Wasser und eine gegebenenfalls nötige pH-Regulierung können gewünschtenfalls erfolgen, während das Wasser mit dem Katalysator in Kontakt ist. Zweckmäßig wird jedoch das Wasserstoffgas in einer separaten Einrichtung in das Wasser eingebracht, bevor dieses mit dem Katalysator kontaktiert wird. Gewünschtenfalls kann man dabei den pH-Wert des zu behandelnden Wassers so einregulieren, daß der nachfolgende pH-Anstieg im gewünschten Bereich bleibt.

Der pH-Wert des zu behandelnden Wassers sollte in einem Bereich von etwa 4 bis 8, insbesondere 6 bis 8 liegen.

Üblicherweise enthält Wasser, dessen Nitrit- und/oder Nitratgehalt mit dem erfindungsgemäßen Verfahren reduziert werden soll, auch Sauerstoff gelöst. Zur vollständigen Entfernung des Nitrit- und/oder Nitratgehaltes des Wassers wird daher insgesamt eine solche Menge Wasserstoffgas benötigt, welche mindestens der zur Reduktion des Sauerstoffgehaltes und des Nitrit- und/oder Nitratgehaltes des Wassers stöchiometrisch notwendigen Menge entspricht. So sind zur Reduktion von 100 mg Nitrat theoretisch etwa 9 mg Wasserstoff erforderlich, zur Entfernung von 8 mg Sauerstoff etwa 1 mg Wasserstoff. Sofern das zu behandelnde Wasser nur geringere Mengen an Nitrit und/oder Nitrat enthält, erweist es sich als zweckmäßig, eine solche Menge Wasserstoff einzuleiten, welche mindestens der stöchiometrisch berechneten Menge und höchstens einem 20 %igen Überschuß dieser berechneten Menge entspricht.

Die Begasung des Wassers mit Wasserstoff erfolgt vorzugsweise nach der Art der Permeationsbegasung. Hierbei erfolgt der Gaseintrag in das Wasser über eine feste Membran, beispielsweise eine Silikonkautschukmembran. Besonders gut geeignet sind Membranen mit integralasymmetrischem Aufbau und insbesondere Kompositmembranen. Diese Membranen umfassen eine poröse, wasserbeständige Trägerstruktur und mindestens eine Schicht aus wasserbeständigem, porenfreiem Polymer, an der die zu begasende Flüssigkeit vorbeigeführt wird. Diese porenfreie Schicht, z. B. aus Silikonpolymer, ist sehr dünn, sie weist beispielsweise eine Dicke von 0,5 bis 10 Mikrometer auf. Solche Membranen werden in der EP-A 291 679 (US-A 4,933,085) beschrieben. Andere Methoden, z. B. über Gassättiger, sind ebenfalls zum H₂-Eintrag geeignet.

Das erfindungsgemäße Verfahren kann bei Normaldruck oder geringem Überdruck, z. B. bis zu 10 Atmosphären oder mehr arbeiten. Die Löslichkeit des Wasserstoffgases in dem Wasser liegt bei Normaldruck und Temperaturen zwischen 10 und 25 °C unter 1,7 mg/l und erhöht sich proportional zum Arbeitsdruck. Wo zur Reduktion höherer Nitrit- und/oder Nitratmengen entsprechend größere Mengen Wasserstoff benötigt werden, empfiehlt es sich daher, die Begasung unter Druck vorzunehmen. Bei der Behandlung von Wasser, das nur Sauerstoff enthält, ist das Arbeiten bei Umgebungsdruck sehr gut möglich.

Bevorzugt betreibt man das erfindungsgemäße Verfahren als expandiertes Bett, Wirbelbett, Suspensions- oder Fließbett.

Bei hohem Gehalt an Sauerstoff, Nitrit beziehungsweise Nitrat kann man das erfindungsgemäße Verfahren notfalls mehrfach hintereinander durchführen oder den Arbeitsdruck erhöhen, bis eine ausreichende Verminderung z. B. auch für Trinkwasser tolerierbare Werte oder eine vollständige Entfernung erreicht ist. Dabei kann man einen Teil des bereits behandelten Wassers in den Reaktor rückführen oder man sieht mehrere Reaktionseinheiten mit Begasungseinrichtung und Reaktor vor. Über die eingesetzte Wasserstoffmenge beziehungsweise mehrfache Behandlung des Wassers kann man jede beliebige Restkonzentration des ursprünglichen Gehaltes an Sauerstoff bzw. Nitrit oder Nitrat im behandelten Wasser einstellen.

Die Temperatur bei der Behandlung kann zwischen 5 °C und 95 °C, vorzugsweise zwischen 8 °C und 25 °C betragen.

Die Nitrit- und/oder Nitratabbauleistung kann je nach der Nitrit- und/oder Nitratanfangskonzentration, dem pH-Wert der Wasserstoffgaskonzentration beziehungsweise -begasungsrate und der Temperatur variieren. Mit einem Palladium-Katalysator mit 1 oder 2 Gew.-% Palladium können im diskontinuierlichen Labortest beispielsweise Nitritabbauleistungen von über 40 mg Nitrit pro Stunde und Gramm Katalysator erzielt werden. Mit einem mit Palladium und Kupfer dotierten Katalysator mit 1,0 Gew.-% Palladium und 0,25 Gew.-% Kupfer auf Aluminiumoxid können beispielsweise Nitratabbauleistungen von 15 mg Nitrat pro Stunde und Gramm Katalysator erzielt werden.

Ein kontinuierlich durchführbares Festbettverfahren und eine dafür verwendbare Anlage werden in der EP-A-0 359 074 beschrieben. Das Wasser wird zunächst in einen Dosierbehälter geleitet, in welchem der pH-Wert gemessen werden kann, dann durch eine Entkeimungsvorrichtung, schließlich über eine Pumpe durch eine oder mehrere Reaktionseinheiten aus Wasserstoff-Begasungsbehälter und Festbettreaktor. Die Anlage kann noch weitere Maßeinrichtungen umfassen, beispielsweise Durchflußmeßgeräte, Druckmeßgeräte, pH-Meßgeräte, Temperaturmeßgeräte. Das behandelte Wasser kann dann noch einer pH-Werteinstellung unterworfen werden.

Für die Durchführung des erfindungsgemäßen Verfahrens in der Wirbelschicht oder Suspensionsschicht ist die im folgenden beschriebene Anlage besonders gut geeignet. Sie umfaßt eine Druckerhöhungseinrichtung, die mit einer Wasserstoff-Eintragseinrichtung verbunden ist, die das Wasser in einem Wirbelschicht-, Suspensionsbett- oder Fließbettreaktor leitet, der den obenbeschriebenen speziellen Aluminiumoxid-Trägerkatalysator enthält. Vorzugsweise weist die Anlage zwei Filtereinrichtungen auf, die vor der Druckerhöhungseinrichtung beziehungsweise nach dem Reaktor angeordnet sind. Die Anlage kann noch einen Dosierbehälter pH-Meß- und Regeleinrichtung aufweisen, der vor und/oder hinter Druckerhöhungseinrichtung angeordnet ist. Gewünschtenfalls können in den Rohrleitungen beziehungsweise den Anlagenteilen noch Meßstellen zur Bestimmung analytischer Daten des Wassers angebracht sein, beispielsweise Druckmeßeinrichtungen, Druckflußmeßeinrichtungen und/oder Temperaturmeßeinrichtungen.

Die Begasungseinheit weist vorzugsweise eine Permeationsmembran zum Wasserstoffeintrag auf. Sehr gut geeignet sind auch Permeationsmembranen, die eine aus porösem, wasserbeständigem Polymer gebildete Trägerstruktur umfassen und mindestens eine Schicht aus wasserbeständigem, porenfreien Polymer, wobei das zu behandelnde Wasser auf der Seite der Schicht aus wasserbeständigem, porenfreien Polymer mit der Membran in Kontakt steht. Sehr gut geeignet sind beispielsweise integralasymmetrische Membranen, z. B. aus Polyetherimid. Ganz besonders gut geeignet sind Membranen, die zusätzlich mit wasserbeständigem, hydrophobem, porenfreiem Polymer, vorzugsweise Silikonpolmer, beschichtet sind. Solche Membranen sind als Komposit-Membranen bekannt. Die Begasungseinheit kann beispielsweise als Hohlfadenmodul ausgebildet sein.

Das erfindungsgemäße Verfahren weist erhebliche Vorteile auf. Aufgrund der hohen Selektivität der einzusetzenden Trägerkatalysatoren entstehen keine die Umwelt belastenden Nebenprodukte, aufgrund der hohen mechanischen Stabilität und Abriebfestigkeit dieser Katalysatoren kann das erfindungsgemäße Verfahren über lange Zeit ohne Einbuße an Katalysatoraktivität und ohne die Notwendigkeit eines Austausches des Katalysators beschrieben werden. Besonders vorteilhaft sowohl in wirtschaftlicher als auch hygienischer Hinsicht ist die Durchführung des erfindungsgemäßen Verfahrens bei Anwendung eines kugelförmigen Trägerkatalysators in der Wirbelschicht.

Der anzuwendende Trägerkatalysator enthält vorzugsweise Palladium oder Palladium und Kupfer als katalytisch aktive Komponente. Der Palladiumgehalt beträgt bevorzugt 0,1 bis 4 Gew.-%, insbesondere 0,5 bis 2,5 Gew.-%, bezogen auf das Gesamtgewicht des fertigen Trägerkatalysators. Besteht die Metallkomponente aus Palladium und Kupfer, liegt das Gewichtsverhältnis von Palladium zu Kupfer vorzugsweise zwischen 2:1 und 8:1, vorzugsweise 3:1 und 5:1, insbesondere 4 ± 0,1:1.

Die Erfindung wird anhand der folgenden Beispiele erläutert, ohne sie in ihrem Umfang einzuschränken.
**Figur 1:**
   Schematische Darstellung des Verfahrens zur Trägerherstellung:
   (1): Sol, (2): Pumpe, (3): Sprühvorrichtung, (4): Solstrahl, (5): Soltropfen, (6): Reaktionszone mit Reaktionsgas, (7): Reaktionsgaszufuhr, (8): Auffangvorrichtung mit Reaktionsflüssigkeit, (9): Sieb (fakultativ) zur Abtrennung der Teilchen von der Reaktionsflüssigkeit, (10): Sammelbehälter für die Teilchen, (11): Pumpe, (12): Rücklauf der Reaktionsflüssigkeit in den Vorlagebehälter, α: Winkel α. d: variabler Abstand zwischen Sprühvorrichtung und Eintrittsöffnung in die Reaktionszone.
   Das zu verarbeitende Sol (1) wird unter Druck über die Pumpe (2) und die Kanüle (3) bzw. Kanülen (3'), (3''), ... in einem Solstrahl (4) in die Reaktionszone mit Reaktionsgas (6) in der Weise eingesprüht, daß der Solstrahl (4) nach Eintritt in die Reaktionszone (6) in Solperlen (5) aufriß. Nach dem Durchfliegen einer gekrümmten Flugbahn durch das Reaktionsgas in die Reaktionszone (6) wurden die Solperlen (5) in der mit Reaktionsflüssigkeit gefüllten Auffangvorrichtung (8) aufgefangen. Als Reaktionsgas wurde Ammoniak-Gas eingesetzt, welches über die Reaktionsgaszufuhr (7) ständig in die Reaktionszone (6) nachgefüllt wurde. Als Reaktionsflüssigkeit wurde eine Ammoniak-Lösung eingesetzt. Die Teilchen wurden dann in der wäßrigen Ammoniak-Lösung gealtert und anschließend über das Sieb (9) von der Reaktionsflüssigkeit getrennt und in den Sammelbehälter (10) überführt. Die Reaktionsflüssigkeit wurde über die Pumpe (11) durch den Rücklauf (12) wieder zurück in die Auffangvorrichtung (8) gepumpt.
**Figur 2:**
   Schematischer Aufbau einer weiteren Vorrichtung zur Durchführung des erfindungsgemäßen Verfahrens für kleine Teilchen (0,001 bis 0,3 mm):
   (1): Sol, (2): Spühvorrichtung mit Zerstäuberdüse, (3): Nebel aus keinen Solperlen, (4): Reaktionszone mit Reaktionsgas, (5): Auffangvorrichtung, (6): Reaktionsgaszufuhr, (7): Sieb (fakultativ), (8): Sammelbehälter, (9): Pumpe, (10) fakultativ: Rücklauf der Reaktionsflüssigkeit in den Auffangbehälter (fakultativ)
**Figur 3:**
   Elektronenmikroskopische Aufnahmen zur Oberflächenbeschaffenheit durch Sprühgelierung hergestellter Träger-Teilchen:
**Figur 3A:**
   Teilchen auf Basis von Alumosilikat mit 2,5 - 3,5 mm Durchmesser,
   Beschleunigungsspannung: 5 KV X 14,8
**Figur 3B:**
   Teilchen auf Basis von Siliciumdioxid mit 0,4 - 0,6 mm Durchmesser,
   Beschleunigungsspannung: 5 KV x 71,1
   Die erhaltenen Teilchen wurden anschließend auf an sich bekannte Weise einem Basenaustausch unterzogen, getrocknet und getempert.

### Beispiele

Die folgenden Beispiele 1 bis 4 beschreiben die Herstellung der Alugel-Träger. Sie wurden in einer Vorrichtung gemäß Fig. 1 durchgeführt.

### Beispiel 1:

### Herstellung von Alugel-Teilchen

### Kugelförmige Teilchen auf der Basis von Aluminiumoxid wurden folgendermaßen hergestellt:

Ein metastabiles saures Aluminiumoxidsol (Condea Disperal^{R} 30/2) mit einer Zusammensetzung aus 14,19 Gew.-% Al₂O₃ und 85,81 Gew.-% Wasser wurde in einer Vorrichtung nach Fig. 1 mittels der Pumpe (2) bei einem Druck von 6 bar über 10 Kanülen (Durchmesser: 0,70 mm; Länge: 3,2 cm) mit einem Durchsatz von 0,75 l/Minute von unten nach oben versprüht.

Die Solstrahlen rissen nach einer Flugstrecke von insgesamt etwa 75 cm in gleichgroße Soltröpfchen auf, wobei sie bereits nach etwa 25 cm in den mit Ammoniakgas gefüllten Fällturm gelangten. Nachfolgend sind die weiteren Reaktionsbedingungen angegeben:

| | |
|---|---|
| Vorlage: | 5 %ige Ammoniaklösung |
| Alterung: | 1 h |
| Trocknen: | 8 h 120° |
| Tempern: | 4 h 600° |
| Durchmesser: | 0,4 - 0,6 mm |
| Schüttgewicht: | 0,71 g/ml |
| spezifische Oberfläche: | 287 m²/g |
| Porenvolumen: | 0,44 ml/g |

### Beispiel 2:

### Herstellung des Trägers unter Isopropanol-Behandlung

### 2.1. Träger auf Basis von Al₂O₃

Kugelförmige Teilchen auf der Basis von Aluminiumoxid wurden wie in Beispiel 1 angegeben, hergestellt. Zusätzlich wurden diese Teilchen noch einer Behandlung mit wasserfreiem Isopropanol (Dichte: 0,785 g/ml) unterzogen. Für eine Zeitdauer von 2 Stunden wurden dafür die erhaltenen Teilchen vor dem Trocknen mit je 1 Liter Isopropanol pro 1 Liter Teilchen überschichtet. Bei einigen der Teilchen wurde die Isopropanol-Behandlung auch mehrfach durchgeführt, indem die Teilchen aus der Isopropanol-Lösung dekantiert wurden und anschließend wieder für die gleiche Zeitdauer in identischer Weise mit Isopropanol überschichtet wurden. Diese Isopropanol-Behandlung wurde bei einigen Teilchen bis zu achtmal hintereinander durchgeführt. Nach dem Trocknen und Kalzinieren, wie bereits in Beispiel 1 beschrieben, erhielt man Teilchen mit den in der nachfolgenden Tabelle angegebenen Eigenschaften.

Aus Tabelle 1 geht hervor, daß das Porenvolumen, das Schüttgewicht sowie der mittlere Porendurchmesser von nach dem erfindungsgemäßen Verfahren hergestellten Aluminiumoxid-Teilchen sich durch die zusätzliche Alkohol-Behandlung in weiten Bereichen variieren lassen.

**Tabelle 1**

| Eigenschaften der gemäß Beispiel 2.1 erhaltenen Verfahrensprodukte | | | | | | | |
|---|---|---|---|---|---|---|---|
| | | Al₂O₃, Durchmesser der Teilchen: 0,4 -0,6 mm | | | | | |
| Anzahl der Alkohol-Behandlungen | Dichte des Isopropanols nach Behandlung der Teilchen [g/ml] | Schüttgewicht [g/ml] | Porenvolumen [ml/g] | spezifische Oberfläche [m²/g] | mittlerer Porendurchmesser [Å] | Trocknung [h/°C] | Kalzination [h/°C] |
| 1 | 0,930 | 0,53 | 0,75 | 272 | 110 | 8/120 | 4/600 |
| 2 | 0,884 | 0,47 | 0,91 | 282 | 129 | 8/120 | 4/600 |
| 3 | 0,846 | 0,41 | 1,15 | 292 | 156 | 8/120 | 4/600 |
| 4 | 0,818 | 0,35 | 1,35 | 298 | 181 | 8/120 | 4/600 |
| 5 | 0,806 | 0,30 | 1,61 | 296 | 218 | 8/120 | 4/600 |
| 8 | 0,795 | 0,14 | 2,48 | 284 | 349 | 8/120 | 4/600 |

Dichte des Isopropanols vor Behandlung der Teilchen: d = 0,785 g/ml

### Beispiel 2.2.:

### Träger auf Basis von SiO₂

Ein metastabiles Kieselsol (Bayer 200S, 30 % SiO₂), angesäuert mit Salpetersäure bis auf pH 4, wurde in einer Vorrichtung nach Fig. 1 mittels der Pumpe (2) bei einem Druck von 6,5 bar über 10 Kanülen (Durchmesser: 0,70; Länge 3,20 cm) mit einem Durchsatz von 0,73 l/Minute von unten nach oben versprüht, wobei die Sohlstrahlen in die mit Ammoniakgas gefüllte Reaktionszone in gleichgroße Solperlen aufrissen. Nachfolgend sind die weiteren Reaktionsbedingungen sowie die Eigenschaften der erhaltenen Teilchen angegeben:

| | |
|---|---|
| Vorlage: | 5 %ige Ammoniaklösung |
| Alterung: | 0,5 h |
| Alkohol-Behandlung: | zweimal 2 h, Isopropanol |
| Trocknen: | 8 h 120° |
| Tempern: | 4 h 200° |
| Durchmesser: | 0,4 - 0,6 mm |
| Schüttgewicht: | 0,49 g/ml |
| spezifische Oberfläche: | 297 m²/g |
| Porenvolumen: | 0,80 ml/g |
| Oberlächenbeschaffenheit: | dargestellt in Fig. 3B |

### Beispiel 2.3.:

### Träger auf Basis von SiO₂

Hierfür wurden jeweils separat eine saure Lösung A und eine alkalische Silikatlösung B hergestellt:

| | | |
|---|---|---|
| Lösung A | H₂SO₄ | 9,49 Gew.-% |
| | H₂O | 90,51 Gew.-% |
| | d_{20°} | 1,065 g/ml |
| Lösung B | Na₂O | 5,49 Gew.-% |
| | SiO₂ | 18,53 Gew.-% |
| | H₂O | 75,98 Gew.-% |
| | d_{20°} | 1,226 g/ml |

Die saure Lösung A und die alkalische Lösung B wurden in einer an sich bekannten Mischdüse bei einer Temperatur von ca 25 °C miteinander vermischt und in einer Vorrichtung gemäß Figur 1 sofort und kontinuierlich weiterverarbeitet.

Hierfür wurde das aus dem Zusammenmischen der beiden Komponenten unter einer Druckdifferenz von wenigstens 2 bar bei pH 8,3 erhaltene Sol über eine gebräuchliche kommerziell erhältliche Spiraldüse (Firma Spraybest, Greenfield, USA) in einer Menge von 1,2 l/Minute in einem Solstrahl (4) in den Fällturm (6) in der Weise eingesprüht, daß der Sohlstrahl (4) bei Eintritt in den Fällturm (6) in Solperlen (5) aufriß.

Nach dem Durchfliegen einer gekrümmten Flugbahn durch das Reaktionsgas im Fällturm (6) wurden die Solperlen (5) in dem mit Reaktionsflüssigkeit gefüllten Auffangbehälter (8) aufgefangen. Als Reaktionsgas wurde HCl-Gas eingesetzt, welches über die Reaktionszufuhr (7) ständig in den Fällturm (6) nachgefüllt wurde. Als Reaktionsflüssigkeit wurde eine wäßrige 2,5 %ige HCl-Lösung eingesetzt.

Die Teilchen wurden etwa 30 Minuten in der wäßrigen Chlorwasserstoff-Lösung gealtert und anschließend über das Sieb (9) von der Reaktionsflüssigkeit getrennt und in den Sammelbehälter (10) überführt. Die Reaktionsflüssigkeit wurde über die Pumpe (11) durch den Rücklauf (12) wieder zurück in den Auffangbehälter (8) gepumpt.

Die erhaltenen Teilchen wurden anschließend auf an sich bekannte Weise einem Basenaustausch mit 0,5 %iger Schwefelsäurelösung unterzogen, gewaschen bis zur Sulfatfreiheit, für 18 Stunden bei 180 °C getrocknet und dann unterschiedlich weiterverarbeitet, wie in der nachfolgenden Tabelle 6 dargestellt. Man erhielt kugelförmige Alumosilikat-Teilchen mit Durchmessern im Bereich von 0,9 bis 1,5 mm, deren Eigenschaften ebenfalls in Tabelle 6 aufgeführt sind.

**Tabelle 1a**

| Unterschiedliche Weiterbehandlungsschritte und Eigenschaften der gemäß Beispiel 2.3. erhaltenen Verfahrensprodukte | | | |
|---|---|---|---|
| **Beispiel** | **2.3.1.** | **2.3.2.** | **2.3.2.** |
| Weiterbehandlung nach dem Trocknen | | 4 h 550° Hydrothermale Alterung 2 h 180 °C 1 n NH₄OH | Aufweitung des Porenvolumens durch Isopropanol-Behandlung, 5 x |
| Temperung | 4 h 550 °C | 4 h 600 °C | 4 h 180 °C |
| Durchmesser | 0,9 - 1,5 mm | 0,9 - 1,5 mm | 0,9 - 1,5 mm |
| Schüttgewicht | 0,61 g/ml | 0,48 g/ml | 0,28 g/ml |
| Oberfläche | 722 m²/g | 27 m²/g | 650 m²/g |
| Porenvolumen | 0,49 ml/g | 0,50 ml/g | 1,90 ml/g |

### Beispiel 2.4.:

### Träger auf Basis von Alumosilikat

Hierfür wurden jeweils separat eine saure Lösung A und eine alkalische Silikatlösung B hergestellt:

| | | |
|---|---|---|
| Lösung A | H₂SO₄ | 9,05 Gew.-% |
| | Al₂(SO₄)₃ | 0,89 Gew.-% |
| | H₂O | 90,06 Gew.-% |
| | d_{20°} | 1,065 g/ml |
| Lösung B | Na₂O | 5,49 Gew.-% |
| | SiO₂ | 18,53 Gew.-% |
| | H₂O | 75,98 Gew.-% |
| | d_{20°} | 1,226 g/ml |

Die saure Lösung A und die alkalische Lösung B wurden in einer an sich bekannten Mischdüse bei einer Temperatur von ca 7 °C miteinander vermischt und in einer Vorrichtung gemäß Fig. 1 sofort und kontinuierlich weiterverarbeitet.

Hierfür wurde das aus dem Zusammenmischen der beiden Komponenten unter einer Druckdifferenz von wenigstens 2 bar bei pH 8,3 erhaltene Sol über eine Kanüle von 3,7 mm Durchmesser und 10 cm Länge in einer Menge von 3,9 l/Minute in einem Solstrahl (4) in die Reaktionszone (6) in der Weise einsprüht, daß der Solstrahl (4) bei Eintritt in die Reaktionszone (6) in Solperlen (5) aufriß.

Nach dem Durchfliegen einer gekrümmten Flugbahn durch das Reaktionsgas wurden die Solperlen (5) in dem mit Reaktionsflüssigkeit gefüllten Auffangbehälter (8) aufgefangen. Als Reaktionsgas wurde HCl-Gas eingesetzt, welches über die Reaktionsgaszufuhr (7) ständig in die Reaktionszone (6) nachgefüllt wurde. Als Reaktionsflüssigkeit wurde eine wäßrige 2,5 %ige HCl-Lösung eingesetzt.

Die Teilchen wurden etwa 30 Minuten in der wäßrigen Chlorwasserstoff-Lösung gealtert und anschließend über das Sieb (9) von der Reaktionsflüssigkeit getrennt und in den Sammelbehälter (10) überführt. Die Reaktionsflüssigkeit wurde über die Pumpe (11) durch den Rücklauf (12) wieder zurück in die Auffangvorrichtung (8) gepumpt.

Die erhaltenen Teilchen wurden anschließend auf an sich bekannte Weise einem Basenaustausch mit 0,5 %iger Schwefelsäurelösung unterzogen, gewaschen bis zur Sulfatfreiheit, für 18 Stunden bei 180 °C getrocknet und für 4 Stunden bei 200 °C getempert.

Man erhielt kugelförmige Alumosilikat-Teilchen mit Durchmessern im Bereich von 2,5 bis 3,5 mm, deren Schüttdichte, spezifische Oberfläche und Porenvolumen in der folgenden Tabelle 3 angegeben sind.

**Tabelle 3**

| Eigenschaften der gemäß Beispiel 2 erhaltenen Verfahrensprodukte | |
|---|---|
| Durchmesser: | 2,5 - 3,5 mm |
| Schüttgewicht: | 0,77 g/ml |
| Oberfläche: | 741 m²/g |
| Porenvolumen: | 0,35 ml/g |
| Oberlächenbeschaffenheit: | dargestellt in Fig. 3A |

### Beispiel 3:

### Kugelförmige Teilchen auf der Basis von Aluminiumoxid wurden folgendermaßen hergestellt:

Ein metastabiles saures Aluminiumoxidsol (Condea Disperal^{R} 30/1) mit einer Zusammensetzung aus 18,00 Gew.-% Al₂O₃ und 82,00 Gew.-% Wasser wurde in einer Vorrichtung nach Fig. 1 mittels einer elektrisch angetriebenen Sprühpistole (Bullcraft N, 80W) mit einem Durchsatz von 0,060 l/Minute von unten nach oben in den mit Ammoniakgas gefüllten Fällturm eingesprüht. Nachfolgend sind die weiteren Reaktionsbedingungen sowie die Eigenschaften der erhaltenen Teilchen angegeben:

| | |
|---|---|
| Vorlage: | 5 %ige Ammoniaklösung |
| Alterung: | 0,5 h |
| Alkoholbehandlung: | zweimal 2 h, Isopropanol |
| Trocknen: | 8 h 120° |
| Tempern: | 4 h 600° |
| Durchmesser: | 0,02 - 0,05 mm |
| Schüttgewicht: | 0,43 g/ml |
| spezifische Oberfläche: | 291 m²/g |
| Porenvolumen: | 1,19 ml/g |

### Beispiel 4:

### Kugelförmige Teilchen auf der Basis von Aluminiumoxid wurden folgendermaßen hergestellt:

Ein metastabiles salpetersaures Aluminiumoxidsol (Condea Disperal^{r} 30/1) wurde wie in Beispiel 1 beschrieben über 4 Kanülen in der Vorrichtung nach Fig. 1 in die Reaktionszone des mit Ammoniakgas gefüllten Fällturm gesprüht. Nachfolgend sind die weiteren Reaktionsbedingungen angegeben:

| | |
|---|---|
| Vorlage: | 3 %ige Ammoniaklösung |
| Alkoholbehandlung: | 3 mal 2 h, Isopropanol |
| Trocknen: | 8 h 120° |
| Tempern: | 4 h 900 °C |
| Durchmesser: | 0,4 bis 0,6 mm |
| Schüttgewicht: | 0,58 g/ml |
| spezifische Oberfläche: | 180 m²/g |
| Porenvolumen: | 0,68 ml/g |

### Beispiel 5:

### Kugelförmige Teilchen auf der Basis von Aluminiumoxid wurden folgendermaßen hergestellt:

Ein metastabiles saures Aluminiumhydratsol (Versal ^{R}900) mit einer Zusammensetzung aus 15,35 Gew.-% Al₂O₃ 0,38 Gew.-% HNO₃ und 84,27 Gew.-% Wasser wurde in einer Vorrichtung nach Fig. 1 mittels Pumpe (2) bei einem Druck von 6 bar über 10 Kanülen (Durchmesser: 0,70 mm; Länge: 3,2 cm) wie bereits in Beispiel 3 beschrieben, mit einem Durchsatz von 0,75 l/Minute von unten nach oben versprüht.

Nachfolgend sind die weiteren Reaktionsbedingungen angegeben:

| | |
|---|---|
| Vorlage: | 5 %ige Ammoniaklösung |
| Alterung: | 1 h |
| Trocknen: | 10 h 180°C |
| Tempern: | 6 h 600°C |
| Durchmesser: | 0,4 - 0,6 mm |
| Schüttgewicht: | 0,66 g/ml |
| spezifische Oberfläche: | 190 m²/g |
| Porenvolumen: | 0,58 ml/g |
| Porenverteilung: | (Quecksilberporosimetrie) |

### Bestimmung der Abriebfestigkeit

Die Abriebfestigkeit der nach Beispiel 1 bis 5 hergestellten Teilchen wurde nach folgendem Verfahren zur Bestimmung der relativen Abriebfestigkeit untersucht: jeweils 1,0 g der zu untersuchenden Teilchen wurden in ein 10 ml-Schnappdeckelglas (45 x 22 mm) eingewogen und zweimal mit 5 ml voll entsalztem Wasser (VE-Wasser) gespühlt, um eventuell anhaftenden Staub zu entfernen. Das oberflächlich anhaftende Wasser wurde dabei mit einer Kapillare abgesaugt, so daß lediglich das in den Poren befindliche Wasser an den Teilchen verblieb. Es wurden dann erneut 5 ml VE-Wasser zugegeben und das verschlossene Glas 1 Minute auf einem Reagenzglasschüttler (Fa. Heidolf, Reax 1R) bei 2.400 U/min geschüttelt. 2 ml der überstehenden Lösung wurden dann sofort in eine 10 mm-Küvette überführt und der Extinktionswert E mehrfach nach wiederholtem Aufschütteln bei einer Wellenlänge von 500 µm (Spektralphotometer CADAS 100, Firma Dr. Lange) gemessen. Bei E-Werten, die größer als 1 waren, wurde die Probe entsprechend verdünnt, wobei die Linearität der Meßwerte gegeben war.

Mechanisch stabile und damit abriebfeste Teilchen zeigen unter diesen Versuchsbedingungen E-Werte im Bereich von 0,1 bis 0,7.

Die folgende Tabelle 2 zeigt die bei diesem Test erhaltenen Werte für die relative Abriebfestigkeit der nach Beispiel 1 bis 5 hergestellten Teilchen.

**Tabelle 2**

| **Abriebfestigkeit** | | | | |
|---|---|---|---|---|
| **Erfindungsgemäß hergestelltes Teilchen nach Beispiel** | **Material** | **Durchmesser mm** | **Porenvolumen ml/g** | **Extinktion E** |
| 2; 1 x alkoholbehandelt | Al₂O₃ | 0,4 - 0,6 | 0,75 | 0,22 |
| 2; 5 x alkoholbehandelt | Al₂O₃ | 0,4 - 0,6 | 1,61 | 0,57 |
| 3 | Al₂O₃ | 0,02 - 0,05 | 1,19 | 0,29 |
| 5 | Al₂O₃ | 0,4 - 0,6 | 0,58 | 0,18 |

### Beispiel 6:

### Herstellung von Palladium enthaltenden Alugel-Trägerkatalysatoren

### Allgemeine Herstellvorschrift:

### 6.1.: Herstellung eines 1 Gew.-% Pd enthaltenden Trägerkatalysators

10 kg des zur Belegung vorgesehenen Trägermaterials wurden in 60 l entionisiertem Wasser gewaschen. Nach Abgießen des Wassers wurde das vorbehandelte Trägermaterial mit 50 l entionisiertem Wasser versetzt, in welchem 168,21 g PdCl₂ und 109,85 g NaCl versetzt. Die Tränkdauer betrug üblicherweise etwa 45 Minuten.

Nachdem das Palladiumsalz in das Trägermaterial eingezogen war, wurde die überstehende klare Flüssigkeit abgegossen, das feuchte getränkte Trägermaterial mit Wasser gewaschen und anschließend mit einer Reduktionslösung versetzt. Zur Herstellung dieser Reduktionslösung waren 18,24 g NaBH₄ in 60 l entionisiertem Wasser aufgelöst worden. Nach etwa einer Viertelstunde Kontakt zwischen Trägerkatalysator und Reduktionslösung wurde diese abgegossen, der Trägerkatalysator gewaschen und getrocknet.

Eine Mikrosonden-Untersuchung ergab, daß das Palladium-Metall im Oberflächenbereich des Trägers konzentriert vorlag. Die Eindringtiefe betrug bis ca. 50 µm.

### 6.2. Herstellung eines 1,5 Gew.-% Palladium enthaltenden Trägerkatalysators

Beispiel 6.1. wurde wiederholt. Diesmal wurde eine Tränklösung verwendet, die 252,32 g PdCl₂ und 164,78 g NaCl enthielt. Die Reduktionslösung bestand aus 67,36 g NaBH₄ gelöst in 60 l entionisiertem Wasser.

Die Mikrosonden-Untersuchung ergab, daß auch bei derartigen Trägerkatalysatoren das Palladiummetall im Oberflächenbereich konzentriert vorlag.

Mit Palladium belegt wurden die kugelförmigen Aluminiumoxid-Teilchen der Beispiele 1 bis 5. Anwendungsversuche ergaben, daß die derart hergestellten Palladium-Alugel-Trägerkatalysatoren zur Entfernung von Sauerstoff aus wäßrigen Lösungen unter Zusatz von Wasserstoff als Reduktionsmittel geeignet sind. Sie eignen sich auch zur kontinuierlichen Nitrit-Reduktion in Wasser. Die Nitrit-Abbauleistung der Palladium-Alugel-Trägerkatalysatoren mit 1 Gew.-% Pd lag im kontinuierlichen Verfahren zwischen etwa 8 und etwa 10 mg Nitrit pro Gramm Katalysator und Stunde, die Ammoniumbildung betrug üblicherweise weniger als 5 Mol.-%.

### Beispiel 7:

### Herstellung eines Pd/Cu-Alugel-Trägerkatalysators

### 7.1. Herstellung des Trägerkatalysators ohne Basenvorbehandlung

### 7.1.1. Herstellung des Trägerkatalysators mit 1 Gew.-% Pd und 0,25 Gew.-% Cu

Verwendet wurde der gemäß Beispiel 4 hergestellte Träger, der in Analogie zu Beispiel 6 mit 1 Gew.-% Pd belegt worden war. 5 kg dieses Palladium enthaltenden Trägers wurden mit 24,5 l einer Kupfertränklösung versetzt, welche durch Auflösen von 39,28 g Kupferacetat-Monohydrat in entionisiertem Wasser erhalten worden war. Die Tränkzeit betrug etwa 45 Minuten. Der Überstand wurde dann abgegossen. Der mit Kupfer getränkte Träger wurde dann mehrfach mit entionisiertem Wasser gewaschen. Anschließend wurde der noch feuchte Träger mit einer Reduktionslösung versetzt, die durch Auflösen von 27,36 g NaBH₄ in 30 l entionisiertem Wasser erzeugt worden war. Nach etwa 15 Minuten Kontakt zwischen Träger und Reduktionslösung wurde der Überstand abgegossen. Der feuchte Trägerkatalysator wurde dann bei 120 °C getrocknet.

### 7.1.2. Herstellung eines Trägerkatalysators mit 1,5 Gew.-% Pd und 0,375 Gew.-% Cu

Beispiel 7.1.1. wurde analog wiederholt. Diesmal wurde für 5 kg des Palladium enthaltenden Trägers 24,5 l einer Kupfertränklösung verwendet, die durch Auflösen von 58,91 g Kupferacetat-Monohydrat in entionisiertem Wasser erhalten worden war. Als Reduktionslösung wurde eine Lösung von 41,04 g NaBH₄ in 30 l entionisiertem Wasser verwendet.

### 7.2. Herstellung eines Pd und Cu enthaltenden Alugel-Trägerkatalysators mit Basenvorbehandlung.

### 7.2.1. Herstellung eines Trägerkatalysators mit 1 Gew.-% Pd und 0,25 Gew.-% Cu

5 kg (Trockengewicht) des in Beispiel 7.1.1. verwendeten Palladium enthaltenden Trägerkatalysators wurden zunächst mit entionisiertem Wasser gewaschen. Dann wurde das Trägermaterial mit ca. 6 l einer Ammoniumcarbonatlösung (Konzentration an Ammoniumcarbonat: 5 g/l) versetzt und über Nacht stehengelassen. Dabei überdeckte die Ammoniumcarbonatlösung das Trägermaterial.

Anschließend wurde die überstehende Lösung abgegossen und das vorbehandelte Trägermaterial kurz gewaschen.

Zur Herstellung der Kupfertränklösung wurden 47,5 g Kupfernitrat-Dihydrat in 10 l entionisiertem Wasser gelöst und anschließend mittels Ammoniumcarbonat auf einen pH-Wert von 5,3 gebracht; dabei soll eine Flockenbildung unterbleiben. In diese Lösung wurde das mit Ammoniumcarbonat wie vorstehend beschrieben behandelte Palladium enthaltende Alugelmaterial eingebracht und 2 Stunden darin belassen. Die überstehende Lösung wurde abgegossen, das Material mehrfach mit entionisiertem Wasser gewaschen und 15 Stunden lang bei 120 °C getrocknet. Anschließend wurde noch 4 Stunden bei 230 °C im Stickstoffstrom getempert, um das entstandene Kupfercarbonat in Kupferoxid umzuwandeln. Anschließend erfolgte wie unter 7.1.1. beschrieben die Reduktion des Kupferoxids mit NaBH₄-Lösung.

### 7.2.2. Herstellung eines 1,5 Gew.-% Pd und 0,375 Gew.-% Cu enthaltenden Trägerkatalysators

Beispiel 7.2.1. wurde wiederholt. Als Kupfertränklösung wurde diesesmal eine Lösung von 71,3 g Cu (NO₃)₂-Trihydrat in 10 l entionisiertem Wasser eingesetzt. Die Reduktion des schließlich erzeugten Kupferoxids erfolgte wie unter 7.1.2. mit NaBH₄-Lösung.

Die Untersuchung mit einer Mikrosonde (Elektronen-Rückstreu-Aufnahme) ergab, daß auch die Palladium und Kupfer enthaltenden Katalysatoren eine Konzentration des aufgebrachten Metalls an der Oberfläche aufwiesen. Die Metalleindringtiefe betrug bis etwa 50 µm.

### Beispiel 8:

### Anwendung von Pd/Cu-Alugel-Trägerkatalysatoren zur Nitratreduktion

Eingesetzt wurden 100 g des gemäß Beispiel 7.2.1. hergestellten Palladium-Kupfer-Alugel-Trägerkatalysators mit 1 Gew.-% Pd und 0,25 Gew.-% Cu. Wasser mit einem Gehalt von 60 mg/l Nitrat wurde mit einer Durchflußrate von etwa 11 l pro Stunde und einem Wasserstoffdruck von 5 bar bei einem pH-Wert von 6,3 durch das Trägerkatalysator-Festbett geführt. Die Nitratabbauleistung betrug 0,7 bis 1,4 mg pro Gramm Katalysator pro Stunde.

## Patentansprüche

1. Kontinuierlich durchführbares Verfahren zur Entfernung oder Verminderung des Sauerstoffgehaltes, des Nitrit- und/oder Nitrat-Gehalts von sauerstoffhaltigem und/oder Nitrit und/oder nitratbelastetem Wasser unter selektiver Stickstoffbildung, wobei man in das sauerstoffhaltige, nitrit- und/oder nitratbelastete Wasser Wasserstoffgas einführt und das mit Wasserstoff beladene Wasser mit einem Katalysator kontaktiert, welcher gebildet wird aus einem mit einer aus Palladium und/oder Rhodium oder aus Palladium und einem Metall der Kupfergruppe bestehenden Metallkomponente beladenen porösen Träger, und man zur Behandlung von nur nitritbelastetem Wasser einen Katalysator, dessen Metallkomponente aus Palladium und/oder Rhodium besteht und, sofern das zu behandelnde Wasser auch Nitrat enthält, einen Katalysator, dessen Metallkomponente aus Palladium und einem Metall der Kupfergruppe oder aus Rhodium und gegebenenfalls Palladium besteht, oder einem Gemisch aus einem Katalysator, dessen Metallkomponente aus Palladium und einem Metall der Kupfergruppe besteht, und einem Katalysator, dessen Metallkomponente nur aus Palladium besteht, einsetzt, und dabei den pH-Wert des Wassers nicht über Ph 8 ansteigen läßt und das Verfahren gegebenenfalls so oft hintereinander durchführt, bis der Sauerstoffgehalt, der Nitritgehalt und/oder der Nitratgehalt des Wassers entfernt oder auf einen tolerierbaren Wert vermindert ist, dadurch gekennzeichnet, daß man einen Trägerkatalysator verwendet, dessen Träger eine monomodale Porenradienverteilung aufweist und durch Überführen eines Sols in kugelförmige Solteilchen unter Kontaktieren mit einem Reaktionsgas und Auffangen der Solteilchen in einer Auffangvorrichtung und anschließender Aufarbeitung der verfestigten Solteilchen unter Altern, Waschen, Trocknen und Kalzinieren hergestellt worden ist.

2. Verfahren nach Anspruch 1, bei dem man die tropfenförmigen Solteilchen derart erzeugt, daß man das Sol in eine ein Reaktionsgas enthaltende Reaktionszone von unten so einsprüht, daß das Sol erst unmittelbar vor oder bei Eintritt in die Reaktionszone in einzelne Solteilchen aufreißt und die gebildeten Solperlen auf einer gekrümmten Flugbahn die Reaktionszone durchfliegen, wobei sie vorverfestigt werden, und man anschließend die vorverfestigten Solteilchen in der Auffangvorrichtung auffängt.

3. Verfahren nach Anspruch 2, gekennzeichnet durch die Verwendung einer Folie oder eines glatten, gekühlten Auffangbleches oder eines, mit einer Flüssigkeit gefüllten Auffangbehälters als Auffangvorrichtung bei der Trägerherstellung.

4. Verfahren nach Anspruch 1, 2 oder 3, gekennzeichnet durch die Verwendung wäßriger Ammoniaklösung als Reaktionsflüssigkeit und von Ammoniak als Reaktionsgas bei der Trägerherstellung.

5. Verfahren nach einem der vorhergehenden Ansprüche, dadurch gekennzeichnet, daß Palladium oder Palladium und Kupfer als katalytisch aktive Komponente und Aluminiumoxid als Träger eingesetzt wird.

6. Verfahren nach einem der vorhergehenden Ansprüche, dadurch gekennzeichnet, daß man einen Trägerkatalysator verwendet, dessen Träger bei einer Temperatur von 400 bis 1200 °C kalziniert wurde.

7. Verfahren nach einem der vorhergehenden Ansprüche, dadurch gekennzeichnet, daß man einen Trägerkatalysator verwendet, dessen Korngröße im Bereich von 0,05 mm bis 1 mm, vorzugsweise im Bereich 0,4 bis 0,6 mm und dessen Porenvolumen im Bereich von 0,4 bis 1,2 ml/g liegt.

8. Verfahren nach einem der vorhergehenden Ansprüche, dadurch gekennzeichnet, daß man einen Trägerkatalysator verwendet, dessen mittlerer Porendurchmesser im Bereich von 5 bis 150 nm (50 bis 1500 Å), vorzugsweise 10 bis 20 nm (100 bis 200 Å) liegt.

9. Verfahren nach einem der vorhergehenden Ansprüche, dadurch gekennzeichnet, daß in das Wasser eine solche Menge Wasserstoff eingeführt wird, welche mindestens der zur Reduktion des vorbestimmten Gehaltes an Sauerstoff und Nitrit und/oder Nitrat stöchiometrisch notwendigen Wasserstoffmenge und höchstens einem 20 gew.-%igen Überschuß dieser Menge entspricht.

10. Verfahren nach einem der vorhergehenden Ansprüche, dadurch gekennzeichnet, daß man Wasser einsetzt, welches mit 0,1 mg/l bis 2 g/l Nitrit und/oder 1 mg/l bis 10 g/l Nitrat belastet ist.

11. Verfahren nach einem der vorhergehenden Ansprüche, dadurch gekennzeichnet, daß man es in einer Wirbelschicht oder einem expandierten Bett durchführt.

12. Zur Verminderung des Sauerstoffgehaltes, des Nitrit- und/oder Nitratgehaltes geeigneter Trägerkatalysator, umfassend Palladium, Rhodium oder Palladium und ein Metall der Kupfergruppe auf einem Träger auf Basis anorganischer Oxide aus der Gruppe Magnesiumoxid, Aluminiumoxid, Siliciumdioxid, Alumosilikat, Zinkoxid, Titandioxid, Chromoxid, Kupferoxid, Manganoxid, Ceroxid, Zinnoxid, Eisenoxid, Nickeloxid, Bleioxid, Molybdänoxid, Vanadiumoxid, Thoriumoxid, Zirkonium- und/oder Hafniumoxid, vorzugsweise auf Basis Aluminiumoxid, wobei der Träger durch Überführen eines Sols in kugelförmige Solteilchen unter Kontaktieren der Solteilchen mit einem Reaktionsgas und Auffangen der Solteilchen in einer Auffangvorrichtung, Aufarbeiten der verfestigten Solteilchen durch Altern, Waschen, Trocknen und Kalzinieren, hergestellt wurde, mit der Maßgabe, daß der Träger eine spezifische Oberfläche im Bereich von 5 bis 250 m²/g, vorzugsweise im Bereich von 100 bis 200 m²/g und eine monomodale Porenradienverteilung aufweisen soll.

13. Trägerkatalysator nach Anspruch 12, dadurch gekennzeichnet, daß der Träger vor dem Aufbringen der katalytisch aktiven Metallkomponente bei einer Temperatur von 400 bis 1200 °C kalziniert wurde.

14. Trägerkatalysator nach einem der Ansprüche 12 oder 13, dadurch gekennzeichnet, daß das Schüttgewicht 0,3 bis 1,2 g/ml und das Porenvolumen 0,4 bis 1,2 ml/g beträgt.

15. Trägerkatalysator nach einem der Ansprüche 12 bis 14, gekennzeichnet durch einen Gehalt an Palladium oder Rhodium im Bereich von 0,5 bis 4 Gew.- %, und, sofern Kupfer enthalten ist, durch einen Gehalt an Kupfer im Bereich von 0,1 bis 2 Gew.- %.

16. Trägerkatalysator nach einem der Ansprüche 12 bis 15, dadurch gekennzeichnet, daß der Träger derart hergestellt ist, daß man das Sol von unten in eine ein Reaktionsgas enthaltende Reaktionszone so einsprüht, daß das Sol erst unmittelbar vor oder bei Eintritt in die Reaktionszone in einzelne Solteilchen aufreißt und die gebildeten kugelförmigen Solteilchen auf einer gekrümmten Flugbahn die Reaktionszone durchfliegen, wobei sie vorverfestigt werden, und man anschließend die vorverfestigten Solteilchen in der Auffangvorrichtung auffängt.

17. Trägerkatalysator nach einem der Ansprüche 12 bis 16, dadurch gekennzeichnet, daß der mittlere Porendurchmesser im Bereich von 10 bis 20 nm (100 bis 200 Å) liegt.

## Claims

1. A continuously performable process for removing or reducing the oxygen content, the nitrite and/or nitrate content of oxygen-containing and/or nitrite- and/or nitrate-laden water with selective formation of nitrogen, wherein hydrogen gas is introduced into the oxygen-containing, nitrite- and/or nitrate-laden water and the water laden with hydrogen is contacted with a catalyst, which is formed of a porous support laden with a metal component consisting of palladium and/or rhodium or of palladium and a metal of the copper group, and for the treatment of water which is laden only with nitrite, a catalyst is used the metal component of which consists of palladium and/or rhodium and, if the water to be treated also contains nitrate, a catalyst is used, the metal component of which consists of palladium and a metal of the copper group, or of rhodium and optionally palladium, or of a mixture consisting of a catalyst, the metal component of which consists of palladium and a metal of the copper group, and of a catalyst, the metal component of which consists solely of palladium, and the pH value of the water is not permitted to rise above pH 8 and the process is optionally performed consecutively as often as necessary until the oxygen content, the nitrite content and/or the nitrate content of the water has been removed or reduced to a tolerable value, characterised in that a supported catalyst is used, the support of which has a monomodal pore radius distribution and has been prepared by converting a sol into spherical sol particles by contacting with a reaction gas and collecting the sol particles in a collecting device and subsequent working-up of the solidified sol particles with ageing, washing, drying and calcining.

2. A process according to Claim 1, in which the sol particles in droplet form are produced such that the sol is sprayed from below into a reaction zone containing a reaction gas such that the sol does not break into individual sol particles until immediately before or upon entry into the reaction zone, and the resulting sol beads fly through the reaction zone on a curved trajectory, whereupon they are pre-solidified, and then the pre-solidified sol particles are collected in the collecting device.

3. A process according to Claim 2, characterised by the use of a foil or a smooth, cooled collecting tray or a collecting container filled with a liquid as a collecting device in the preparation of the support.

4. A process according to Claim 1, 2 or 3, characterised by the use of aqueous ammonia solution as reaction liquid and of ammonia as reaction gas in the preparation of the support.

5. A process according to one of the preceding claims, characterised in that palladium or palladium and copper is used as the catalytically active component and aluminium oxide as support.

6. A process according to one of the preceding claims, characterised in that a supported catalyst is used, the support of which was calcined at a temperature of 400 to 1200°C.

7. A process according to one of the preceding claims, characterised in that a supported catalyst is used, the grain size of which lies in the range from 0.05 mm to 1 mm, preferably in the range from 0.4 to 0.6 mm, and the pore volume of which lies in the range of 0.4 to 1.2 ml/g.

8. A process according to one of the preceding claims, characterised in that a supported catalyst is used which has an average pore diameter in the range of 5 to 150 nm (50 to 1500 Å), preferably 10 to 20 nm (100 to 200 Å).

9. A process according to one of the preceding claims, characterised in that a quantity of hydrogen is introduced into the water which corresponds at least to the quantity of hydrogen which is stoichiometrically required for reduction of the predetermined content of oxygen and nitrite and/or nitrate and at most to a 20% excess of this quantity.

10. A process according to one of the preceding claims, characterised in that water is used which is laden with 0.1 mg/l to 2 g/l nitrite and/or 1 mg/l to 10 g/l nitrate.

11. A process according to one of the preceding claims, characterised in that it is performed in a fluidised bed or an expanded bed.

12. A supported catalyst, suitable for reducing the oxygen content, nitrite and/or nitrate content, comprising palladium, rhodium or palladium and a metal of the copper group, on a support on the basis of inorganic oxides from the group magnesium oxide, aluminium oxide, silicon dioxide, alumosilicate, zinc oxide, titanium dioxide, chromium oxide, copper oxide, manganese oxide, cerium oxide, tin oxide, iron oxide, nickel oxide, lead oxide, molybdenum oxide, vanadium oxide, thorium oxide, zirconium oxide and/or hafnium oxide, preferably on the basis of aluminium oxide, wherein the support has been prepared by converting a sol into spherical sol particles by contacting the sol particles with a reaction gas and collecting the sol particles in a collecting device, working-up of the solidified sol particles by ageing, washing, drying and calcining, with the proviso that the support should have a specific surface area in the range of 5 to 250 m²/g, preferably in the range of 100 to 200 m²/g, and should have a monomodal pore radius distribution.

13. A supported catalyst according to Claim 12, characterised in that the support has been calcined at a temperature of 400 to 1200°C before the application of the catalytically active metal component.

14. A supported catalyst according to one of Claims 12 or 13, characterised in that the bulk density is 0.3 to 1.2 g/ml and the pore volume 0.4 to 1.2 ml/g.

15. A supported catalyst according to one of Claims 12 to 14, characterised by a content of palladium or rhodium in the range of 0.5 to 4% by weight and, if it contains copper, by a content of copper in the range of 0.1 to 2% by weight.

16. A supported catalyst according to one of Claims 12 to 15, characterised in that the support is produced such that the sol is sprayed from below into a reaction zone containing a reaction gas such that the sol does not break into individual sol particles until immediately before or upon entry into the reaction zone, and the resulting spherical sol particles fly through the reaction zone on a curved trajectory, whereupon they are pre-solidified, and then the pre-solidified sol particles are collected in the collecting device.

17. A supported catalyst according to one of Claims 12 to 16, characterised in that the average pore diameter is in the range of 10 to 20 nm (100 to 200 Å).

## Revendications

1. Procédé de mise en oeuvre continu pour éliminer ou réduire la teneur d'oxygène, la teneur de nitrite et/ou de nitrate de l'eau contenant de l'oxygène et/ou chargée de nitrite et/ou de nitrate par la formation sélective d'azote, dans lequel on introduit du gaz d'hydrogène dans l'eau contenant de l'oxygène et chargée de nitrite et/ou de nitrate, l'eau chargée d'hydrogène étant mise en contact avec un catalyseur formé à partir d'un support poreux chargé d'une composante métallique de palladium et/ou de rhodium ou de palladium et d'un métal du groupe de cuivre, et on utilise, pour traiter de l'eau chargée seulement de nitrite, un catalyseur dont la composante métallique est formée de palladium et/ou de rhodium, et dans la mesure où l'eau à traiter contient aussi du nitrate, un catalyseur dont la composante métallique est formée de palladium et d'un métal du groupe de cuivre ou de rhodium et éventuellement de palladium, ou un mélange d'un catalyseur dont la composante métallique est formée de palladium et d'un métal du groupe de cuivre, et un catalyseur dont la composante métallique est formée seulement de palladium, et ce faisant on ne laisse pas la valeur pH de l'eau s'élever au-dessus de pH 8 et éventuellement on répète le procédé suffisamment de fois jusqu'à l'élimination de la teneur d'oxygène, de la teneur de nitrite et/ou de la teneur de nitrate dans l'eau ou sa réduction à une valeur tolérable, caractérisé en ce qu'on utilise un catalyseur supporté dont le support présente une répartition monomodale des rayons de pore et a été fabriqué par la transformation d'un sol en particules sphériques de sol par contact avec un gaz réactif et capture des particules de sol dans un collecteur suivi d'un retraitement des particules de sol consolidées par vieillissement, lavage, séchage et calcination.

2. Procédé selon la revendication 1, du type selon lequel les particules de sol en forme de gouttelettes sont fabriquées de telle sorte que le sol est pulvérisé par le bas dans une zone de réaction contenant un gaz de réaction de manière que le sol éclate en particules de sol isolées immédiatement avant ou en pénétrant dans la zone de réaction et que les perles de sol ainsi formées volent à travers la zone de réaction en suivant une trajectoire en courbe, ce qui a pour effet de les consolider, et finalement on recueille les particules de sol consolidées dans le collecteur.

3. Procédé selon la revendication 2, caractérisé par l'utilisation d'une feuille ou d'une tôle collectrice lisse refroidie ou d'un réservoir rempli de liquide servant de collecteur pour la fabrication du support.

4. Procédé selon les revendications 1, 2 ou 3, caractérisé par l'utilisation d'une solution ammoniacale aqueuse servant de liquide de réaction et d'ammoniac comme gaz de réaction dans la fabrication du support.

5. Procédé selon l'une des revendications précédentes, caractérisé en ce qu'on utilise du palladium ou du palladium et du cuivre comme composante catalytique active et de l'oxyde d'aluminium comme support.

6. Procédé selon l'une des revendications précédentes, caractérisé en ce qu'on utilise un catalyseur supporté dont le support est calciné à une température de 400 à 1200 °C.

7. Procédé selon l'une des revendications précédentes, caractérisé en ce qu'on utilise un catalyseur supporté dont la granulométrie est de l'ordre de 0,05 mm à 1 mm, de préférence de l'ordre de 0,4 à 0,6 mm et dont le volume de pores se situe entre 0,4 et 1,2 ml/g.

8. Procédé selon l'une des revendications précédentes, caractérisé en ce qu'on utilise un catalyseur supporté dont le diamètre moyen des pores est de l'ordre de 5 à 150 nm (50 à 1500 Å), de préférence de 10 à 20 nm (100 à 200 Å).

9. Procédé selon l'une des revendications précédentes, caractérisé en ce que le volume d'hydrogène introduit dans l'eau est tel qu'il correspond au moins au volume d'hydrogène stoechiométrique nécessaire pour réduire la teneur d'oxygène et de nitrite et/ou de nitrate prédéfinie et au maximum à un excédent de 20% en poids de ce volume.

10. Procédé selon l'une des revendications précédentes, caractérisé en ce qu'on utilise de l'eau avec une charge de 0,1 mg/l à 2 g/l de nitrite et/ou 1 mg/l à 10 g/l de nitrate.

11. Procédé selon l'une des revendications précédentes, caractérisé en ce qu'il est effectué dans une couche fluidisée ou un lit expansé.

12. Catalyseur supporté utilisable pour réduire la teneur d'oxygène, la teneur de nitrite et/ou de nitrate, comprenant du palladium, du rhodium ou du palladium et un métal du groupe de cuivre sur un support à base d'oxydes minéraux du groupe des oxyde de magnésium, oxyde d'aluminium, dioxyde de silicium, silicate d'aluminium, oxyde de zinc, dioxyde de titane, oxyde de chrome, oxyde de cuivre, oxyde de manganèse, oxyde de cérium, oxyde d'étain, oxyde de fer, oxyde de nickel, oxyde de plomb, oxyde de molybdène, oxyde de vanadium, oxyde de thorium, oxyde de zirconium et/ou oxyde de hafnium, de préférence à base d'oxyde d'aluminium, le support étant fabriqué par la transformation d'un sol en particules sphériques de sol par contact des particules de sol avec un gaz de réaction et capture des particules de sol dans un collecteur, retraitement des particules de sol consolidées par vieillissement, lavage, séchage et calcination, étant entendu que le support doit avoir une surface spécifique de l'ordre de 5 à 250 m²/g, de préférence de l'ordre de 100 à 200 m²/g et une répartition monomodale des rayons de pore.

13. Catalyseur supporté selon la revendication 12, caractérisé en ce que le support a été calciné à une température de 400 à 1200 °C avant l'application de la composante de métal catalytique active.

14. Catalyseur supporté selon l'une des revendications 12 ou 13, caractérisé en ce que la densité apparente est de 0,3 à 1,2 g/ml et le volume des pores de 0,4 à 1,2 ml/g.

15. Catalyseur supporté selon l'une des revendications 12 à 14, caractérisé par une teneur de palladium ou de rhodium de l'ordre de 0,5 à 4 % en poids, et dans la mesure où il contient du cuivre, par une teneur de cuivre de l'ordre de 0,1 à 2 % en poids.

16. Catalyseur supporté selon l'une des revendications 12 à 15, caractérisé en ce que le support est fabriqué de telle sorte que le sol est pulvérisé par le bas dans une zone de réaction contenant un gaz de réaction de manière que le sol éclate en particules de sol isolées peu avant ou en pénétrant dans la zone de réaction et que les particules de sol sphériques formées volent à travers la zone de réaction en suivant une trajectoire courbe, ce qui a pour effet de les consolider, et finalement les particules de sol consolidées sont recueillies dans un collecteur.

17. Catalyseur supporté selon l'une des revendications 12 à 16, caractérisé en ce que le diamètre moyen des pores est de l'ordre de 10 à 20 nm (100 à 200 Å).
